# EUROPÄISCHE PATENTSCHRIFT

(11) **EP 4 013 271 B1**
(45) Veröffentlichungstag und Bekanntmachung des Hinweises auf die Patenterteilung: **06.11.2024**
(21) Anmeldenummer: 20757265.2
(22) Anmeldetag: 12.08.2020
(51) Int. Cl.: A47J 31/06, A47J 31/36

(54) **GETRÄNKEZUBEREITUNGSVORRICHTUNG UND VERFAHREN ZUR ZUBEREITUNG EINES GETRÄNKS MITHILFE EINER PORTIONSKAPSEL EINES ERSTEN UND EINES ZWEITEN TYPS, SOWIE SYSTEM UMFASSEND EINE GETRÄNKEZUBEREITUNGSVORRICHTUNG UND EIN PORTIONSKAPSELSET.**
BEVERAGE PREPARATION APPARATUS AND METHOD FOR PREPARING A BEVERAGE USING A SINGLE-SERVE CAPSULE OF A FIRST AND A SECOND TYPE, AND SYSTEM COMPRISING A BEVERAGE PREPARATION APPARATUS AND A SINGLE-SERVE CAPSULE SET.
DISPOSITIF DE PRÉPARATION DE BOISSON ET PROCÉDÉ POUR PRÉPARER UNE BOISSON AU MOYEN D'UNE CAPSULE PORTION D'UN PREMIER ET D'UN DEUXIÈME TYPE, ET SYSTÈME COMPRENANT UN DISPOSITIF DE PRÉPARATION DE BOISSON ET UN ENSEMBLE CAPSULE PORTION

(30) Priorität: 13.08.2019 DE 102019212110
(43) Veröffentlichungstag der Anmeldung: 22.06.2022
(73) Patentinhaber: Eugster/Frismag AG, 8580 Amriswil (CH)
(72) Erfinder: SONDEREGGER, Remo, 8274 Tägerwilen (CH); FISCHER, Daniel, 8590 Romanshorn (CH); THEUER, Tobias, 3626 Hünibach (CH)
(74) Vertreter: Kutzenberger Wolff & Partner
(86) Internationale Anmeldenummer: PCT/EP2020/072624
(87) Internationale Veröffentlichungsnummer: WO 2021/028472

(56) Entgegenhaltungen:
- EP-A1- 2 409 608
- WO-A1-2014/096121
- WO-A1-2015/004613
- WO-A1-2019/077568

## Beschreibung

### Stand der Technik

Die vorliegende Erfindung geht aus von einer Getränkezubereitungsvorrichtung mit einem Gehäuse und einer in diesem Gehäuse angeordneten Brühvorrichtung zum Extrahieren einer ein Getränkesubstrat enthaltenden Portionskapsel, wobei die Brühvorrichtung ein erstes Brühkammerelement und ein zweites Brühkammerelement umfasst, wobei das erste Brühkammerelement und das zweite Brühkammerelement von einer Ladestellung, in welcher das erste Brühkammerelement und das zweite Brühkammerelement voneinander beabstandet sind, in eine Extraktionsstellung, in welcher das erste Brühkammerelement und das zweite Brühkammerelement eine im Wesentlichen geschlossene Brühkammer bilden und in welcher ein Brühvorgang durchführbar ist, entlang eines vorbestimmten und im Wesentlichen horizontalen Weges relativ zueinander bewegbar sind, wobei das erste Brühkammerelement einen zur Aufnahme der Portionskapsel vorgesehenen Hohlraum umfasst.

Derartige Getränkezubereitungsvorrichtungen sind bereits hinlänglich aus dem Stand der Technik bekannt. Portionskapseln, die ein Getränkesubstrat, wie beispielsweise gemahlenen Kaffee, Teeblätter und/oder Milchpulver enthalten, werden mittels einer Brühvorrichtung der Getränkezubereitungsvorrichtung mit einer unter Druck stehenden Flüssigkeit, z.B. Wasser, durchströmt, um ein Getränk zu bilden. Die Portionskapseln sind beispielsweise im Wesentlichen kegelstumpfförmig ausgebildet und bestehen aus einem Kunststoffmaterial und/oder Aluminium. Sie weisen einen an einer oberen Öffnung umlaufenden Rand bzw. Flansch auf. An diesen Rand ist oft eine Deckelfolie gesiegelt, die die Öffnung verschließt, wodurch der Getränkerohstoff im Wesentlichen luftdicht eingeschlossen wird. Zur Verwendung wird die Portionskapsel in der Getränkezubereitungsvorrichtung auf beiden Seiten, d.h. an der Deckelfolie und dem Boden, angestochen, um einen Durchgang der Flüssigkeit zu ermöglichen. Da die Portionskapsel in der Regel aus einem vergleichsweise weichem Material gefertigt ist, welches dem hohen, verwendeten Wasserdruck nicht standhält, wird die Portionskapsel in der Getränkezubereitungsvorrichtung in eine, insbesondere flüssigkeitsdichte, Brühkammer eingeschlossen.

Weiterhin ist es bekannt, mithilfe der oben genannten Portionskapseln eine Vielzahl von verschiedenen Getränken zuzubereiten. Um beispielsweise auch unterschiedliche Mengen eines Getränks bei gleichbleibender Qualität zuzubereiten ist es wünschenswert, Portionskapseln unterschiedlichen Volumens in der gleichen Getränkezubereitungsvorrichtung verwenden zu können.

Hierzu ist es notwendig, dass das Brühkammervolumen an das Volumen der Portionskapsel anpassbar ist. Daher sind bereits Getränkezubereitungsvorrichtungen vorgeschlagen worden, welche beispielsweise Portionskapseln mit unterschiedlichen Rändern bzw. Flanschen verwenden, wobei die unterschiedlichen Ränder erkannt und das Brühkammervolumen, in der Regel motorisch, angepasst wird. Derartige Getränkezubereitungsvorrichtungen werden beispielsweise in der WO 2019/077568,

EP 3 019 056 B1, der EP 3 076 831 B1 oder der EP 3 076 833 B1 offenbart.

Dabei ist es jedoch wünschenswert, auch solche Portionskapseln verwenden zu können, welche im oberen Bereich im Wesentlichen identisch sind, also insbesondere einen Rand mit gleichen Abmessungen aufweisen, sich jedoch in ihrer axialen Länge und somit ihrem Volumen unterscheiden.

Weiterhin wurde bereits in der EP 2 906 091 B1 eine Getränkezubereitungsmaschine vorgeschlagen, welche eine Größenerfassungsanordnung aufweist, welche das Vorhandensein einer Portionskapsel detektiert und anschließend die Größe der Portionskapsel ermittelt, beispielsweise optisch, magnetisch oder elektrisch, woraufhin die Konfiguration der Brühkammer entsprechend der Größe angepasst werden kann. Eine derartige Größenerfassungsanordnung ist jedoch fehleranfällig, komplex und somit kostspielig.

### Offenbarung der Erfindung

Es ist daher eine Aufgabe der vorliegenden Erfindung, eine Getränkezubereitungsmaschine der eingangs genannten Art zur Verfügung zu stellen, welche die vorgenannten Nachteile nicht aufweist und insbesondere eine einfache, zuverlässige und mechanische Volumenänderung der Brühkammer zur Anpassung an verschiedene Portionskapselgrößen ermöglicht.

Die Aufgabe der vorliegenden Erfindung wird gelöst mit einer Getränkezubereitungsvorrichtung nach Anspruch 1, mit einem Gehäuse und einer in diesem Gehäuse angeordneten Brühvorrichtung zum Extrahieren einer ein Getränkesubstrat enthaltenden Portionskapsel eines ersten und eines zweiten Typs vorgeschlagen, wobei eine Portionskapsel des ersten Typs eine größere axiale Länge aufweist als eine Portionskapsel des zweiten Typs, wobei die Portionskapseln in einem Randbereich, also im Bereich einer durch eine Deckelfolie verschlossenen Öffnung, identisch ausgebildet sind und sich lediglich hinsichtlich ihrer axialen Länge unterscheiden, und wobei die Brühvorrichtung ein erstes Brühkammerelement und ein zweites Brühkammerelement umfasst, wobei das erste Brühkammerelement und das zweite Brühkammerelement von einer Ladestellung, in welcher das erste Brühkammerelement und das zweite Brühkammerelement voneinander beabstandet sind, in eine Extraktionsstellung, in welcher das erste Brühkammerelement und das zweite Brühkammerelement eine im Wesentlichen geschlossene Brühkammer bilden und in welcher ein Brühvorgang durchführbar ist, entlang eines vorbestimmten und im Wesentlichen horizontalen Weges relativ zueinander bewegbar sind, wobei das erste Brühkammerelement einen zur Aufnahme der Portionskapsel vorgesehenen Hohlraum umfasst, wobei der Hohlraum axial durch ein entlang der horizontalen Richtung zwischen einer Ausgangsstellung und einer zweiten Stellung verstellbares Bodenelement begrenzt ist, wobei der Hohlraum in der zweiten Stellung ein größeres Volumen als in der Ausgangsstellung aufweist, wobei das erste Brühkammerelement eine durch die Portionskapsel und/oder das zweite Brühkammerelement betätigbare Blockiervorrichtung aufweist, wobei die Blockiervorrichtung dazu vorgesehen ist, eine Bewegung des Bodenelements in die horizontale Richtung von dem zweiten Brühkammerelement weg in der Ausgangsstellung oder in der zweiten Stellung zu blockieren, wobei die Blockiervorrichtung wenigstens ein um eine senkrecht zur horizontalen Richtung und insbesondere vertikal ausgerichtete Achse rotierbares erstes Verriegelungsmittel umfasst, wobei eine Bewegung des ersten Verriegelungsmittels in der Ausgangsstellung und in der zweiten Stellung blockierbar ist, und wobei das erste Verriegelungsmittel in der Ausgangsstellung und in der zweiten Stellung jeweils eine Anlagefläche für das Bodenelement aufweist, wobei die Anlagefläche in der Ausgangsstellung insbesondere verschieden ist von der Anlagefläche in der zweiten Stellung. Im Wesentlichen horizontal meint hier insbesondere horizontal, wobei kleine und leichte Abweichungen von der horizontalen Richtung nicht schädlich sein sollen, solange sie über die gesamte Bewegungsstrecke vernachlässigbar sind. Die Brühvorrichtung umfasst somit insbesondere drei verschiedene Stellungen: a) die Brühvorrichtung ist in der Ladestellung und das Bodenelement in der Ausgangsstellung, b) die Brühvorrichtung ist in der Extraktionsstellung und das Bodenelement in der Ausgangsstellung und c) die Brühvorrichtung ist in der Extraktionsstellung und das Bodenelement in der zweiten Stellung. Das erste Brühkammerelement ist ortsfest und das zweite Brühkammerelement beweglich vorgesehen.

Besonders bevorzugt erfolgt die Bewegung des bzw. der Brühkammerteile manuell durch einen Benutzer, beispielsweise über einen an der Oberseite der Getränkezubereitungsvorrichtung angeordneten Hebel, der mittels einer geeigneten Mechanik mit dem wenigstens einen beweglichen Brühkammerelement verbunden ist. Alternativ oder zusätzlich umfasst die Getränkezubereitungsvorrichtung einen Motor, insbesondere einen Elektromotor, der die Relativbewegung bewirkt.

Die erfindungsgemäße Getränkezubereitungsvorrichtung hat gegenüber dem Stand der Technik den Vorteil, dass sie eine rein mechanische und automatische Lösung zur Anpassung des Brühkammervolumens durch eine Anpassung des Volumens des Hohlraums des ersten Brühkammerelements bereitstellt. Es sind insbesondere keine aufwändigen Größenerfassungsanordnungen mit Sensoren notwendig. Ferner sind die Portionskapseln im Randbereich, also im Bereich ihrer durch die Deckelfolie verschlossenen Öffnung identisch unterscheiden sich lediglich hinsichtlich ihrer axialen Länge, d.h. insbesondere, dass eine Vergrößerung des Portionskapselvolumens ausschließlich durch eine axiale Verlängerung der Portionskapsel erzielt wird. Trotz der somit im Randbereich identischen Portionskapseln erfolgt eine Anpassung des Brühkammervolumens in vorteilhafter Weise fehlerfrei und automatisch.

Vorteilhafte Ausgestaltungen und Weiterbildungen der Erfindung sind den Unteransprüchen, sowie der Beschreibung unter Bezugnahme auf die Zeichnungen entnehmbar. Die zu diesem Gegenstand der vorliegenden Erfindung gehörigen Ausführungen gelten auch für die weiteren Gegenstände der vorliegenden Erfindung und umgekehrt.

Die vorliegende Erfindung geht aus von einer horizontal ausgerichteten Brühvorrichtung. Alle Richtungs- und Positionsangaben sind daher auf eine solche bekannte Anordnung bezogen. Der Fachmann versteht jedoch, dass das erfindungsgemäße Konzept der mechanischen Brühkammervolumenanpassung, insbesondere durch die Blockiervorrichtung, auch bei anderen Brühvorrichtungen in anderen räumlichen Anordnungen anwendbar ist. Insbesondere ist auch eine vertikal ausgerichtete Brühvorrichtung denkbar, bei der die Portionskapsel beispielsweise horizontal eingeführt wird und bei der das erste und das zweite Brühkammerelement relativ zueinander entlang einer im Wesentlichen vertikalen Richtung bewegbar sind. Die erfindungsgemäße Blockiervorrichtung ist auch in einer solchen Ausführungsform einsetzbar.

Vorzugsweise weisen Portionskapseln des ersten und des zweiten Typs ein Basiselement mit einem Hohlraum zum Aufnehmen eines Getränkerohmaterials und eine den Hohlraum verschließende Deckelfolie auf, wobei die Deckelfolie an einem umlaufenden Flansch des Basiselements befestigt ist. Besonders bevorzugt ist an einer von der Deckelfolie abgewandten Unterseite des Flansches ein Dichtelement vorgesehen. Das Dichtelement dient insbesondere zur Abdichtung der Brühkammer durch Zusammenwirken des Dichtelements mit dem ersten Brühkammerelement. Ganz besonders bevorzugt sind die Portionskapseln rotationssymmetrisch bezüglich einer axialen Achse ausgebildet. Vorzugsweise sind die Portionskapseln kegelstumpfförmig oder zylinderförmig ausgeführt. In einer bevorzugten Ausführungsform weisen die Portionskapseln, insbesondere das Basiselement, Aluminium auf. In einer alternativen Ausführungsform weisen die Portionskapseln, insbesondere das Basiselement, einen Kunststoff auf. Der durch das Basiselement gebildete Hohlraum dient der Aufnahme von Getränkerohmaterial, beispielsweise Kaffeeröstgranulat, Instantkaffee, Schokoladenpulver, Teeverschnitt, Milchpulver oder dergleichen. Alternativ oder zusätzlich zu Kunststoff oder Aluminium weisen die Portionskapseln ein biologisch abbaubares Material oder eine beliebige Kombination dieser Werkstoffe auf. Die Portionskapseln des ersten und des zweiten Typs weisen ein unterschiedliches Volumen auf, wobei insbesondere der Flansch in seinen Abmessungen identisch ist für beide Typen. Das unterschiedliche Volumen wird also insbesondere lediglich durch die unterschiedliche Länge der Portionskapseln erzeugt.

Vorzugsweise weist das Bodenelement ein umlaufendes Dichtungselement, insbesondere ein ringförmiges Dichtelement, auf, welches besonders bevorzugt mit der Innenwand der Brühkammer abdichtend zusammenwirkt. Somit wird vorteilhafterweise sichergestellt, dass trotz des beweglichen Bodenelements die Brühkammer in der Extraktionsstellung dicht geschlossen ist, so dass weder die durch die Portionskapsel geleitete Flüssigkeit noch das fertige Getränk aus der Brühkammer in die Getränkezubereitungsvorrichtung laufen können.

Gemäß der vorliegenden Erfindung ist vorgesehen, dass die Blockiervorrichtung wenigstens ein um eine senkrecht zur horizontalen Richtung und insbesondere vertikal ausgerichtete Achse rotierbares erstes Verriegelungsmittel umfasst, wobei eine Bewegung des ersten Verriegelungsmittels in der Ausgangsstellung und in der zweiten Stellung blockierbar ist, wobei das erste Verriegelungsmittel in der Ausgangsstellung und in der zweiten Stellung jeweils eine Anlagefläche für das Bodenelement aufweist, wobei die Anlagefläche in der Ausgangsstellung insbesondere verschieden ist von der Anlagefläche in der zweiten Stellung, wobei vorzugsweise die Haupterstreckungsebene des ersten Verriegelungsmittels in der Ausgangsstellung einen Winkel von 45° zur Horizontalen einschließt und/oder in der zweiten Stellung einen Winkel von 90° zur Horizontalen einschließt. In besonders vorteilhafter Weise wird somit ein konstruktiv einfach ausgestaltetes Mittel zur Verfügung gestellt, um das Bodenelement in den beiden Stellungen festzulegen, d.h. zu blockieren. Dabei wird insbesondere eine Bewegung in der von dem zweiten Brühkammerelement abgewandten Seite blockiert, d.h. das Bodenelement gerät in Kontakt einer Anlagefläche des ersten Verriegelungsmittels, dessen Position festgelegt ist, wodurch eine weitere Bewegung des Bodenelements verhindert wird. Das erste Verriegelungsmittel rotiert dabei zwischen zwei Positionen, insbesondere einer Position, in welcher es mit der horizontalen Richtung einen Winkel von 45° einschließt und einer Position, in der es mit der horizontalen Richtung einen Winkel von 90° einschließt, wobei in den Positionen die durch die Portionskapsel, die durchgeleitete Flüssigkeit und/oder das zweite Brühkammerelement auf das erste Brühkammerelement, insbesondere das Bodenelement, wirkenden Kräfte über die Anlageflächen abgeleitet werden. Vorzugsweise weist das erste Verriegelungsmittel an dem von der Rotationsachse entfernten Ende wenigstens zwei in einem Winkel aufeinanderstoßende Flächen auf, wobei der Winkel insbesondere 90° beträgt. Besonders bevorzugt weist das erste Verriegelungsmittel wenigstens einen, insbesondere zwei, Kontaktbereiche auf, in welchem in der Ausgangsstellung ein Kontakt zwischen dem ersten Verriegelungsmittel und dem Bodenelement und/oder dem zweiten Verriegelungsmittel erfolgt. Gerade durch das Vorsehen mehrerer Kontaktereiche können die wirkenden Kräfte vorteilhafterweise besser abgeleitet werden und die Stabilität der erfindungsgemäßen Getränkezubereitungsvorrichtung somit erhöht werden.

Gemäß einer bevorzugten Ausführungsform der vorliegenden Erfindung ist vorgesehen, dass die Blockiervorrichtung zwei erste Verriegelungsmittel aufweist, die insbesondere spiegelsymmetrisch zu einer zwischen den ersten Verriegelungsmitteln angeordneten und zur horizontalen Richtung parallelen Ebene angeordnet sind. Hierdurch wird die Sicherheit in besonders vorteilhafter Weise weiter erhöht, da die Kräfte symmetrisch zu beiden Seiten des Bodenelements abgeleitet werden.

Gemäß einer bevorzugten Ausführungsform der vorliegenden Erfindung ist vorgesehen, dass das erste Brühkammerelement wenigstens ein zweites Verriegelungsmittel aufweist, wobei das zweite Verriegelungsmittel entlang eines vorbestimmten Weges horizontal beweglich vorgesehen ist, wobei das zweite Verriegelungsmittel bei Verwendung einer Portionskapsel des zweiten Typs derart mit dem ersten Verriegelungsmittel zusammenwirkend vorgesehen ist, dass es das erste Verriegelungsmittel in der Ausgangstellung blockiert, wobei das zweite Brühkammerelement vorzugsweise wenigstens ein Haltemittel zum Halten und Führen der Portionskapsel aufweist, wobei das zweite Verriegelungsmittel durch das zweite Brühkammerelement und insbesondere durch das Haltemittel betätigbar ist. Vorzugsweise ist für jedes erste Verriegelungsmittel ein zugehöriges zweites Verriegelungsmittel vorgesehen. Besonders bevorzugt ist das zweite Verriegelungsmittel in der horizontalen Richtung länglich erstreckt, wobei das zweite Verriegelungsmittel insbesondere im Wesentlichen stift- bzw. stabförmig ausgebildet ist. Ganz besonders bevorzugt weist das erste Verriegelungsmittel eine dritte Anlagefläche auf, die zur Anlage an das zweite Verriegelungsmittel vorgesehen ist. Durch das zweite Verriegelungsmittel wird in besonders vorteilhafter Weise sichergestellt, dass bei Verwendung einer Portionskapsel des zweiten Typs eine Rotation des ersten Verriegelungsmittels verhindert wird, wodurch eine Bewegung des Bodenelements blockiert wird und dieses in der Ausgangsstellung festgelegt ist.

Gemäß einer bevorzugten Ausführungsform der vorliegenden Erfindung ist vorgesehen, dass das erste Verriegelungsmittel bei Verwendung einer Portionskapsel des ersten Typs derart mit dem Bodenelement zusammenwirkend vorgesehen ist, dass das erste Verriegelungsmittel von der Ausgangsstellung in die zweite Stellung verbracht wird, wobei das erste Verriegelungsmittel in der zweiten Stellung vorzugsweise durch das Gehäuse, das erste Brühkammerelement, das Bodenelement und/oder das zweite Verriegelungsmittel blockiert ist.

Insbesondere ist die Brühvorrichtung derart ausgebildet, dass je nach verwendetem Portionskapseltyp entweder, bei Verwendung einer längeren bzw. größeren Portionskapsel, die Portionskapsel zuerst das Bodenelement bewegt, wodurch das erste Verriegelungsmittel 90° relativ zur horizontalen Richtung verschwenkt wird, in welcher es fest an dem ersten Brühkammerelement und/oder dem Gehäuse anliegt, oder, bei Verwendung einer kürzeren bzw. kleineren Portionskapsel, das Haltemittel zuerst das zweite Verriegelungsmittel derart bewegt, dass es die Rotation des ersten Verriegelungsmittels blockiert, wodurch wiederum das Bodenelement blockiert wird. In besonders vorteilhafter Weise wird somit eine rein mechanische Lösung implementiert, welche auf Grund der Portionskapselgröße automatisch das korrekte Brühkammervolumen einstellt. Ganz besonders vorteilhaft ist dabei, dass mit dem Bodenelement, dem ersten und dem zweiten Verriegelungsmittel im Grunde lediglich drei bewegliche Elemente Verwendung finden, welche zudem nur einfache Bewegungen (Translation bzw. Rotation) ausführen, wodurch die Fehleranfälligkeit und gesenkt und die Wartungsintervalle verlängert werden.

Gemäß einer bevorzugten Ausführungsform der vorliegenden Erfindung ist vorgesehen, dass das erste Verriegelungsmittel durch ein erstes Rückstellmittel, insbesondere eine Blattfeder, in Richtung des Bodenelements vorgespannt ist, dass das zweite Verriegelungsmittel durch ein zweites Rückstellmittel, insbesondere eine Spiralfeder, in Richtung des zweiten Brühkammerelements vorgespannt ist und/oder dass das Bodenelement durch ein drittes Rückstellmittel, insbesondere eine Spiralfeder, in Richtung der Ausgangsstellung vorgespannt ist. Hierdurch wird in vorteilhafter Weise bei Öffnung der Brühkammer, also bei der Verbringung der Brühvorrichtung von der Extraktionsstellung in die Ladestellung, die Brühvorrichtung selbsttätig wieder in die Ausgangsstellung verbracht.

Gemäß einer bevorzugten Ausführungsform der vorliegenden Erfindung ist vorgesehen, dass die Blockiervorrichtung, insbesondere das zweite Verriegelungsmittel, ein Justierungsmittel aufweist. Besonders bevorzugt ist das Justierungsmittel eine Schraube. Ganz besonders bevorzugt ist die Schraube an dem zum zweiten Brühkammerelement hinweisenden Ende des zweiten Verriegelungsmittels angeordnet. Hierdurch wird vorteilhafterweise ein einfach manuell einstellbares Justierungsmittel bereitgestellt. Durch das Herein- bzw. Herausdrehen der Schraube erfolgt der Kontakt mit dem Haltemittel später bzw. früher, so dass das Blockieren des ersten Verriegelungsmittels durch das zweite Verriegelungsmittel steuerbar ist. Hierdurch ist insbesondere die automatische Brühkammervolumeneinstellung steuerbar, beispielsweise je nach Volumen der zu verwendenden Portionskapseln.

Ein weiterer Gegenstand der vorliegenden Erfindung ist ein System zur Getränkezubereitung umfassend eine erfindungsgemäße Getränkezubereitungsvorrichtung und ein Portionskapselset umfassend wenigstens eine Portionskapsel eines ersten Typs und wenigstens eine Portionskapsel eines zweiten Typs, wobei eine Portionskapsel des ersten Typs eine größere axiale Länge aufweist als eine Portionskapsel des zweiten Typs.

Das erfindungsgemäße System ermöglicht vorteilhafterweise eine höhere Flexibilität und eine größere Varianz von möglichen Getränketypen, da auch Portionskapseln mit verschiedenen Volumina verwendet werden können. Die Getränkezubereitungsvorrichtung ist dabei in besonders vorteilhafter Weise derart vorgesehen, dass sie eine automatische und insbesondere rein mechanische Anpassung des Brühkammervolumens an das Volumen der Portionskapsel ermöglicht.

Die zu diesem Gegenstand der vorliegenden Erfindung gehörigen Ausführungen gelten auch für die weiteren Gegenstände der vorliegenden Erfindung und umgekehrt.

Ein weiterer Gegenstand der vorliegenden Erfindung ist ein Verfahren zur Herstellung eines Getränks mithilfe einer ein Getränkesubstrat beinhaltenden Portionskapsel eines ersten Typs oder eines zweiten Typs, wobei die Portionskapseln in einem Randbereich, also im Bereich einer durch eine Deckelfolie verschlossenen Öffnung, identisch ausgebildet sind und sich lediglich hinsichtlich ihren axialen Länge unterscheiden, wobei eine Portionskapsel des ersten Typs eine größere axiale Länge aufweist als eine Portionskapsel des zweiten Typs, in einer erfindungsgemäßen Getränkezubereitungsvorrichtung einem Gehäuse und einer in diesem Gehäuse angeordneten Brühvorrichtung zum Extrahieren einer ein Getränkesubstrat enthaltenden Portionskapsel des ersten und des zweiten Typs, wobei die Brühvorrichtung ein erstes Brühkammerelement und ein zweites Brühkammerelement umfasst, wobei das erste Brühkammerelement und das zweite Brühkammerelement von einer Ladestellung, in welcher das erste Brühkammerelement und das zweite Brühkammerelement voneinander beabstandet sind, in eine Extraktionsstellung, in welcher das erste Brühkammerelement und das zweite Brühkammerelement eine im Wesentlichen geschlossene Brühkammer bilden und in welcher ein Brühvorgang durchführbar ist, entlang eines vorbestimmten und im Wesentlichen horizontalen Weges relativ zueinander bewegbar sind, wobei das erste Brühkammerelement einen zur Aufnahme der Portionskapsel vorgesehenen Hohlraum umfasst, wobei der Hohlraum axial durch ein entlang der horizontalen Richtung zwischen einer Ausgangsstellung und einer zweiten Stellung verstellbares Bodenelement begrenzt ist, wobei der Hohlraum in der zweiten Stellung ein größeres Volumen als in der Ausgangsstellung aufweist, wobei das erste Brühkammerelement eine durch die Portionskapsel und/oder das zweite Brühkammerelement betätigbare Blockiervorrichtung aufweist, wobei die Blockiervorrichtung dazu vorgesehen ist, eine Bewegung des Bodenelements in die horizontale Richtung von dem zweiten Brühkammerelement weg in der Ausgangsstellung oder in der zweiten Stellung zu blockieren, wobei die Portionskapsel in der Ladestellung in die Getränkezubereitungsvorrichtung eingeführt wird, wobei die Brühvorrichtung in die Extraktionsstellung überführt wird, wobei
- bei Verwendung einer Portionskapsel des ersten Typs das Bodenelement durch die Portionskapsel von der Ausgangsstellung in die zweite Stellung überführt wird und die Bewegung des Bodenelements in die horizontale Richtung in der zweiten Stellung blockiert wird,
- bei Verwendung einer Portionskapsel des zweiten Typs die Blockiervorrichtung derart durch das das zweite Brühkammerelement und insbesondere ein Haltemittel zum Halten und Führen der Portionskapsel betätigt wird, dass die Bewegung des Bodenelements von der Ausgangsstellung in die zweite Stellung blockiert wird,
wobei in der Extraktionsstellung eine Flüssigkeit vorzugsweise unter Druck durch die Portionskapsel geleitet wird, wobei das fertige Getränk durch das Bodenelement abgeführt und durch eine Auslassöffnung ausgegeben wird.

Das erfindungsgemäße Verfahren hat den Vorteil, dass abhängig von dem verwendeten Portionskapselvolumen das Brühkammervolumen durch eine Verschiebung des Bodenelements automatisch mechanisch angepasst wird. Damit die Brühkammer während des Extraktionsvorgangs das korrekte Volumen beibehält blockiert die Blockiervorrichtung in der jeweiligen Stellung eine weitere Bewegung.

Die zu diesem Gegenstand der vorliegenden Erfindung gehörigen Ausführungen gelten auch für die weiteren Gegenstände der vorliegenden Erfindung und umgekehrt.

Gemäß einer bevorzugten Ausführungsform des erfindungsgemäßen Verfahrens ist vorgesehen, dass bei Verwendung der Portionskapsel des zweiten Typs das Haltemittel ein zweites Verriegelungsmittel betätigt, welches das erste Verriegelungsmittel in der Ausgangsstellung blockiert. Hierdurch wird es in besonders vorteilhafter Weise ermöglicht, dass vor einer möglichen Bewegung des Bodenelements das Haltemittel die Blockierung des ersten Verriegelungsmittels bewirkt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken

### Kurze Beschreibung der Zeichnungen

- **Figur 1**: zeigt eine schematische Schnittansicht eines erfindungsgemäßen ersten Brühkammerelements gemäß einer möglichen Ausführungsform.
- **Figur 2**: zeigt perspektivische Schnittansicht des erfindungsgemäßen ersten Brühkammerelements gemäß einer möglichen Ausführungsform.
- **Figur 3**: zeigt eine weitere perspektivische Ansicht des erfindungsgemäßen ersten Brühkammerelements gemäß einer möglichen Ausführungsform.
- **Figur 4**: zeigt eine schematische Ansicht eines erfindungsgemäßen ersten Brühkammerelements in der Ausgangsstellung gemäß einer möglichen Ausführungsform.
- **Figur 5**: zeigt eine schematische Ansicht einer erfindungsgemäßen Brühvorrichtung in der Extraktionsstellung bei Verwendung einer Portionskapsel des ersten Typs gemäß einer möglichen Ausführungsform.
- **Figur 6**: zeigt eine schematische Ansicht einer erfindungsgemäßen Brühvorrichtung in der Extraktionsstellung bei Verwendung einer Portionskapsel des zweiten Typs gemäß einer möglichen Ausführungsform.
- **Figuren 7a-7c**: zeigen schematische Ansichten des erfindungsgemäßen Verfahrens bei Verwendung einer Portionskapsel des zweiten Typs in mehreren aufeinanderfolgenden Schritten gemäß einer möglichen Ausführungsform.
- **Figuren 8a-8c**: zeigen schematische Ansichten des erfindungsgemäßen Verfahrens bei Verwendung einer Portionskapsel des ersten Typs in mehreren aufeinanderfolgenden Schritten gemäß einer möglichen Ausführungsform.
- **Figuren 9a-9d**: zeigen die erfindungsgemäße Brühvorrichtung beim Übergang von der Ladestellung in die Extraktionsstellung bei Verwendung einer Portionskapsel des zweiten Typs in mehreren aufeinanderfolgenden Schritten gemäß einer möglichen Ausführungsform.
- **Figuren 10a-10d**: zeigen die erfindungsgemäße Brühvorrichtung beim Übergang von der Ladestellung in die Extraktionsstellung bei Verwendung einer Portionskapsel des ersten Typs in mehreren aufeinanderfolgenden Schritten gemäß einer möglichen Ausführungsform.
- **Figur 11**: zeigt eine Schnittdarstellung einer erfindungsgemäßen Brühvorrichtung in der Extraktionsstellung bei Verwendung einer Portionskapsel des zweiten Typs gemäß einer möglichen Ausführungsform mit einer Darstellung der wirkenden Kräfte.
- **Figur 12**: zeigt eine perspektivische Detailansicht der Ausführungsform gemäß Figur 11 unter Darstellung der wirkenden Kräfte.
- **Figur 13**: zeigt eine Schnittdarstellung einer erfindungsgemäßen Brühvorrichtung in der Extraktionsstellung bei Verwendung einer Portionskapsel des ersten Typs gemäß einer möglichen Ausführungsform mit einer Darstellung der wirkenden Kräfte.
- **Figur 14**: zeigt eine perspektivische Detailansicht der Ausführungsform gemäß Figur 13 unter Darstellung der wirkenden Kräfte.

### Ausführungsformen der Erfindung

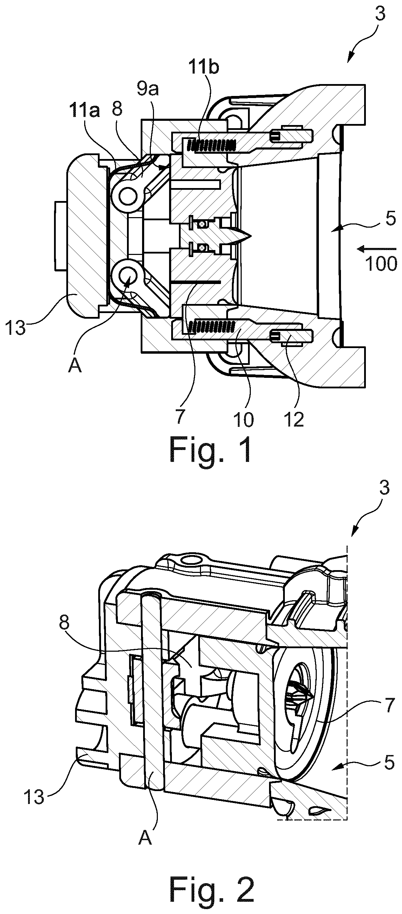

In **Figur 1** ist eine schematische Schnittansicht eines erfindungsgemäßen ersten Brühkammerelements 3 gemäß einer möglichen Ausführungsform dargestellt. Ein derartiges erstes Brühkammerelement 3 ist Teil einer Brühvorrichtung 1, die wiederum Teil einer erfindungsgemäßen Getränkezubereitungsvorrichtung ist. Eine solche Getränkezubereitungsvorrichtung nutzt ein Getränkerohmaterial, wie z.B. Teeblätter, gemahlener und gerösteter Kaffee und/oder Milchpulver, enthaltene Portionskapseln 2a, 2b, um ein Getränk zuzubereiten.

Eine derartige Portionskapsel 2a, 2b besteht aus einem vorzugsweise kegelstumpfförmigen Basiselement, welches insbesondere eine umlaufende Seitenwand sowie einen einstückig damit ausgebildeten Boden aufweist. Diese umschließen einen Hohlraum in der Portionskapsel 2a, 2b in welchem das Getränkerohmaterial, sowie gegebenenfalls weitere Elemente, wie beispielsweise Filter, Wasserverteiler, Stützelemente oder dergleichen, angeordnet sind. Die Portionskapsel 2a, 2b weist gegenüber dem Boden eine Öffnung auf, die in der Regel durch eine Deckelfolie verschlossen ist, wobei die Deckelfolie vorzugsweise in der Ebene der Öffnung an einen umlaufenden Flansch befestigt, beispielsweise angesiegelt, ist. Eine derartige Portionskapsel 2a, 2b ist vorzugsweise rotationssymmetrisch zu einer mittig durch die Portionskapsel verlaufenden Achse ausgebildet.

Im Rahmen der vorliegenden Erfindung werden nun wenigstens zwei verschiedene Typen von Portionskapseln 2a, 2b betrachtet, wobei eine Portionskapsel eines ersten Typs 2a sich von einer Portionskapsel eines zweiten Typs 2b dahingehend unterscheidet, dass sie eine größere axiale Länge aufweist. Vorzugsweise unterscheiden sich die beiden Portionskapseltypen 2a, 2b nur hinsichtlich ihrer axialen Länge, sie sind also insbesondere im Bereich ihrer Öffnung und hinsichtlich der Flansche identisch ausgebildet. Durch die unterschiedliche axiale Länge umfassen sie unterschiedliche Volumina, wobei die Portionskapsel des ersten Typs 2a ein größeres Volumen aufweist als die Portionskapsel des zweiten Typs 2b und somit eine größere Menge an Getränkerohmaterial beinhalten kann. Hierdurch ist es möglich, beispielsweise ein größeres Volumen des Getränks (in gleichbleibender Konzentration bzw. Stärke), oder, z.B. im Falle von Kaffee, bei gleichem Flüssigkeitsvolumen ein Getränk mit höherer Konzentration bzw. Stärke herzustellen.

Dafür wird eine gewünschte Portionskapsel 2a, 2b in die Getränkezubereitungsvorrichtung zwischen ein erstes Brühkammerelement 3 und ein zweites Brühkammerelement 4 einführt, beispielsweise über einen Einwurfschacht in einem Gehäuse der Getränkezubereitungsvorrichtung zugeführt, wobei sich das erste Brühkammerelement 3 und das zweite Brühkammerelement 4 voneinander beabstandet in einer Ladestellung befinden. Das zweite Brühkammerelement 4 umfasst dabei ein Haltemittel 6, beispielsweise zwei zu beiden Seiten der Portionskapsel 2a, 2b angeordnete Arme, die die Portionskapsel 2a, 2b ergreifen und sicher in der horizontalen Position halten bzw. auf dem Weg von der Ladestellung in die Extraktionsstellung führen. Anschließend wird eine Relativbewegung der beiden Brühkammerelemente 3, 4 bewirkt, wobei sowohl beide Brühkammerelemente 3, 4, nacheinander oder gleichzeitig, aufeinander zu bewegbar sind, als auch alternativ eines der Brühkammerelemente 3, 4 ortsfest in dem Gehäuse der Getränkezubereitungsvorrichtung anordenbar ist, wobei in diesem Fall das jeweils andere Brühkammerelement 4, 3 auf das ortsfeste Brühkammerelement 3, 4 zu bewegt wird.

Im Rahmen der hier vorgestellten Ausführungsformen wird eine Variante beschrieben, bei der das erste Brühkammerelement 3 ortsfest innerhalb des Gehäuses angeordnet ist und das zweite Brühkammerelement 4 mitsamt der Portionskapsel 2a, 2b auf das erste Brühkammerelement 3 zu bewegt wird. Dies schränkt jedoch den Gegenstand der vorliegenden Erfindung nicht auf diese Variante ein, sondern dient lediglich der einfacheren Erläuterung des erfindungsgemäßen Prinzips.

Im geschlossenen Zustand bilden das erste Brühkammerelement 3 und das zweite Brühkammerelement 4 eine vorzugsweise fluiddichte Brühkammer, in der die Portionskapsel 2a, 2b aufgenommen wird. Da derartige Portionskapseln 2a, 2b oftmals aus einer Kunststofffolie tiefgezogen werden, halten sie den in der Regel in den Getränkezubereitungsvorrichtungen verwendeten Flüssigkeitsdrücken nicht stand und es besteht die Gefahr eines Platzens der Portionskapseln 2a, 2b. Aus diesem Grund werden sie in den Hohlraum 5 der Brühkammer eingeführt, dessen Innenwände der Form der Portionskapsel 2a, 2b entsprechen, so dass deren Wände in der Brühkammer bei Ausdehnung gestützt werden. Ist die Brühkammer geschlossen, befindet sich die Brühvorrichtung in der Extraktionsstellung. In dieser sind vorzugsweise beide Seiten, also die Deckelfolie und der Boden, angestochen, um einen Flüssigkeitsweg zu erschaffen. Anschließend wird eine Flüssigkeit, beispielsweise Wasser, inbesondere unter Druck durch die Portionskapsel 2b gepumpt, wo sie mit dem Getränkerohmaterial interagiert und ein Getränk bildet, welches durch ein hinteres, hier linkes, Ende des Hohlraums 5 aus der Getränkezubereitungsvorrichtung geführt wird.

In bekannter Weise umfassen derartige Getränkezubereitungsmaschinen üblicherweise ein Flüssigkeitsreservoir, ein Pumpenelement, sowie vorzugsweise ein Heizelement, um die Flüssigkeit zu erhitzen, was beispielsweise für Heißgetränke wie Kaffee, Trinkschokolade, etc. benötigt wird.

Da die Brühkammer auf einen bestimmten Typ von Portionskapsel 2b angepasst ist, wie es auch an dem Hohlraum 5 in **Figur 1** zu erkennen ist, muss die Größe, d.h. das Volumen, des Hohlraums 5 bei Verwendung einer anderen, in diesem Fall voluminöseren, Portionskapsel 2a angepasst werden. Hierzu ist nun erfindungsgemäß ein Bodenelement 7 vorgesehen, welches den Hohlraum 5 an dem dem zweiten Brühkammerelement 4 gegenüberliegenden Ende des Hohlraums 5 abschließt. Vorzugsweise umfasst das Bodenelement 7 ein umlaufendes Dichtelement, um mit der Innenwandung des Hohlraums 5 eine flüssigkeitsdichte Abdichtung bereitzustellen.

Das Bodenelement 7 umfasst besonders bevorzugt wenigstens ein, insbesondere zentral angeordnetes, Aufstechelement, sowie Ablaufmittel, um das fertige Getränk abzuführen. Weiterhin ist das Bodenelement 7 nun beweglich innerhalb des ersten Brühkammerelements 3 vorgesehen, wobei es sich vorzugsweise nur in einer Richtung, hier der horizontalen Richtung 100, in den Figuren also von rechts nach links, bewegen kann. Durch Verlagerung des Bodenelements 7 nach links wird das Volumen des Hohlraums 5 automatisch vergrößert. Vorzugsweise umfasst das erste Brühkammerelement 3 ein Rückstellmittel 11c, beispielsweise eine Spiralfeder, um das Bodenelement 7 in Richtung seiner in **Figur 1** dargestellten Ausgangsstellung vorzuspannen.

Gemäß der hier dargestellten Ausführungsform ist die Getränkezubereitungsvorrichtung für die Verwendung von zwei verschiedenen Portionskapseltypen 2a, 2b geeignet, da das Bodenelement 7 zwei definierte Stellungen einnehmen kann, die Ausgangsstellung und eine zweite Stellung. Wie bereits ausgeführt, ist es entscheidend, dass das Bodenelement 7 in beiden Stellungen fixiert wird, um einen an die jeweilige Portionskapsel 2a, 2b angepassten, druckfesten Hohlraum 5 bereitzustellen.

Erfindungsgemäß umfasst das erste Brühkammerelement 3 hierzu eine Blockiervorrichtung, welche insbesondere rein mechanisch vorgesehen ist, d.h. die Blockiervorrichtung wird rein mechanisch betätigt und der Verstellmechanismus ist rein mechanisch. Diese Blockiervorrichtung umfasst vor allem ein erstes Verriegelungsmittel 8. Dieses ist hier in der Schnittdarstellung im Wesentlichen zeigerförmig ausgebildet, d.h. es ist um eine Achse A, welche senkrecht zur horizontalen Richtung 100 ausgerichtet und insbesondere vertikal vorgesehen ist, rotierbar vorgesehen und an seinem von der Rotationsachse A entferntem Ende in einem 90°-Winkel zugespitzt vorgesehen, d.h. es weist zwei Flächen auf, welche in einem 90° Winkel aufeinanderstoßen.

Gemäß der dargestellten Ausführungsform ist das erste Brühkammerelement 3 hinsichtlich einer horizontalen Mittelebene spiegelsymmetrisch ausgebildet, d.h. es sind zwei identische erste Verriegelungsmittel 8 vorgesehen, welche gegensinnig rotiert werden. Hier ist das erste Brühkammerelement 3 in der Ladestellung und somit das Bodenelement 7 und die ersten Verriegelungsmittel 8 in einer Ausgangsstellung dargestellt. In dieser liegt das Bodenelement 7 an Anlageflächen 9a der ersten Verriegelungsmittel 8 an, wird also durch die ersten Verriegelungsmittel 8 gestützt. Das erste Brühkammerelement 3 umfasst hier ein Rückstellmittel 11a, vorzugsweise eine Blattfeder, die die ersten Verriegelungsmittel 8 gegen das Bodenelement 7 pressen. Seitlich des Hohlraum 5 umfasst das erste Brühkammerelement 3 weiterhin zwei ebenfalls symmetrisch angeordnete zweite Verriegelungsmittel 10, deren Funktionsweise im Zusammenhang mit den folgenden Figuren erläutert werden wird.

Diese zweiten Verriegelungsmittel 10 sind in der horizontalen Richtung 100 länglich erstreckt und derart angeordnet, dass sie durch die Haltemittel 6 des zweiten Brühkammerelements 4 betätigt und in die horizontale Richtung 100 bewegt werden können. Auch die zweiten Verriegelungsmittel 10 werden durch Rückstellmittel 11b, hier Spiralfedern, in die Ausgangsstellung vorgespannt. In der Ladestellung können das Bodenelement 7, die ersten Verriegelungsmittel 8 und die zweiten Verriegelungsmittel 10 gegen die Kraft der Rückstellmittel 11a, 11b, 11c bewegt werden, d.h. keines der Elemente ist in der Ladestellung blockiert.

An den zum zweiten Brühkammerelement 4 weisenden Enden der zweiten Verriegelungsmittel 10 sind gemäß der dargestellten Ausführungsform Justierungsmittel 12 in Form von Schrauben angeordnet, mittels derer manuell der Abstand zwischen den zweiten Verriegelungsmitteln 10 und den Haltemitteln 6 eingestellt werden kann und somit die Empfindlichkeit der Brühvorrichtung gegenüber einer Änderung von der Ausgangsstellung in die zweite Stellung.

Auf der Rückseite des ersten Brühkammerelements 3 ist ein Deckelelement 13 vorgesehen, welches fest mit dem ersten Brühkammerelement 3 verbunden ist und eine feste Anlagefläche für die ersten Verriegelungsmittel 8 in der zweiten Stellung bietet.

In **Figur 2** ist eine perspektivische Schnittansicht des erfindungsgemäßen ersten Brühkammerelements 3 gemäß einer möglichen Ausführungsform dargestellt. Die hier gezeigte Ausführungsform entspricht dabei im Wesentlichen der im Zusammenhang mit **Figur 1** erläuterten Ausführungsform, weswegen auf die diesbezüglichen Ausführungen verwiesen wird. In **Figur 2** sind die Achsen A, um welche die ersten Verriegelungsmittel 8 rotieren, deutlich zu erkennen. Diese durchlaufen das gesamte erste Brühkammerelement 3 und bieten somit einen sicheren Halt und eine gute Kraftübertragung. Ferner ist erkennbar, dass die ersten Verriegelungsmittel 8 parallel zu der Achse A eine längliche Erstreckung aufweisen.

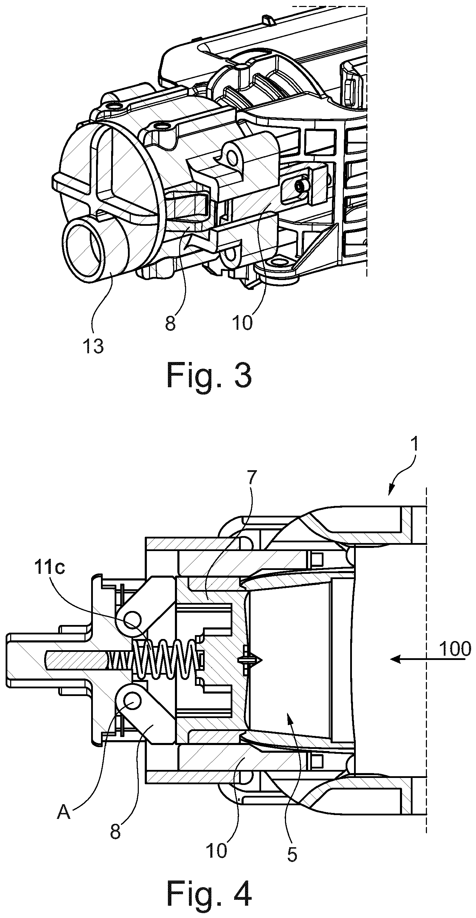

In **Figur 3** ist eine weitere perspektivische Ansicht des erfindungsgemäßen ersten Brühkammerelements 3 gemäß einer möglichen Ausführungsform dargestellt. Auch diese Ausführungsform entspricht im Wesentlichen den bereits zuvor beschriebenen Ausführungsformen. Aus dieser Hinteransicht ist ersichtlich, dass trotz der automatischen und mechanischen Brühkammervolumenanpassung das erste Brühkammerelement 3 nach wie vor eine kompakte Form aufweist, so dass die erfindungsgemäße Getränkezubereitungsvorrichtung raumsparend ist. Weiterhin ist zu erkennen, wie die Justierungsmittel 12, hier die Schrauben, einfach zugänglich sind, so dass ein die Brühvorrichtung auf einfache Art und Weise durch einen Techniker und gegebenenfalls auch durch einen Benutzer kalibrierbar ist.

In **Figur 4** ist eine schematische Ansicht eines erfindungsgemäßen ersten Brühkammerelements 3 in der Ausgangsstellung gemäß einer möglichen Ausführungsform dargestellt. Dabei befindet sich die Brühvorrichtung in der Extraktionsstellung, so dass diese Darstellung im Wesentlichen der Darstellung aus **Figur 1** entspricht. Auf die diesbezüglichen Ausführungen wird verwiesen. Zu erkennen ist hier das Rückstellmittel 11c zur Vorspannung des Bodenelements 7 in die Ausgangsstellung, hier eine Spiralfeder. In dieser Ansicht ist deutlich erkennbar, dass in der Ladestellung die ersten Verriegelungsmittel 8 und die zweiten Verriegelungsmittel 10 derart voneinander beabstandet sind, dass sie einander nicht berühren. In dieser Stellung sind die ersten Verriegelungsmittel 8, abgesehen von dem Widerstand durch das Rückstellmittel 11a, frei in der Bildebene nach oben und unten rotieren, also in eine Position, in der sie einen Winkel von 90° mit der horizontalen Richtung 100 einschließen.

Das Bodenelement 7 wiederum ist in der horizontalen Richtung 100 verschiebbar, was die oben erwähnte Rotation der ersten Verriegelungsmittel 8 bewirkt. Die zweiten Verriegelungsmittel 10 sind in der Ladestellung, erneut abgesehen von der auf sie durch die Rückstellmittel 11b ausgeübten Kräfte, frei in die horizontale Richtung 100 bewegbar.

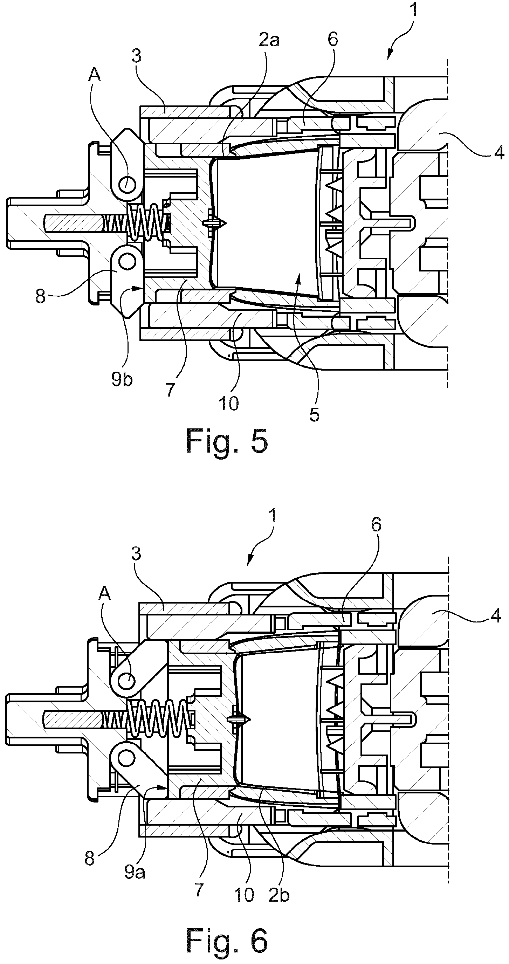

In **Figur 5** ist nun eine schematische Ansicht einer erfindungsgemäßen Brühvorrichtung 1 in der Extraktionsstellung bei Verwendung einer Portionskapsel des ersten Typs 2a gemäß einer möglichen Ausführungsform dargestellt. Das erste Brühkammerelement 3 und das zweite Brühkammerelement 4 sind geschlossen und bilden eine Brühkammer, in welcher eine Portionskapsel des ersten Typs 2a eingeschlossen ist. Das Bodenelement 7 ist durch den Boden der Portionskapsel 2a in die horizontale Richtung 100 verschoben worden. Durch die Bewegung des Bodenelements 7 sind die ersten Verriegelungsmittel 8 um die Achse A rotiert und liegen nun flach an dem hinteren Deckelement 13 an. Das Bodenelement 7 stützt sich an den langen Seiten der ersten Verriegelungsmittel 8 an Anlageflächen 9b ab. Eine weitere Bewegung des Bodenelements 7 in die horizontale Richtung 100 ist daher nicht möglich, das Bodenelement ist in der zweiten Stellung blockiert, einerseits durch die ersten Verriegelungsmittel 8, andererseits durch die Portionskapsel 2a. Beim Schließen der Brühkammer kontaktieren schließlich die Haltemittel 6 die zweiten Verriegelungsmittel 10 und verschieben diese ebenfalls in die horizontale Richtung 100. Zur Extraktion einer Portionskapsel des ersten Typs 2a wird die Brühvorrichtung 1 also in die Extraktionsstellung verbracht, wobei das Bodenelement 7 und die ersten Verriegelungsmittel 8 in die zweite Stellung bewegt werden.

In **Figur 6** ist eine schematische Ansicht einer erfindungsgemäßen Brühvorrichtung 1 in der Extraktionsstellung bei Verwendung einer Portionskapsel des zweiten Typs 2b gemäß einer möglichen Ausführungsform dargestellt. Da die Portionskapsel des zweiten Typs 2b eine geringere axiale Länge als die Portionskapsel des ersten Typs 2a aufweist, werden beim Schließen der Brühkammer zunächst durch den Kontakt mit den Haltemitteln 6 die zweiten Verriegelungsmittel in die horizontale Richtung 100 verschoben. Da der Hohlraum in der Ausgangsstellung bereits an die Portionskapsel des zweiten Typs 2b angepasst ist, erfolgt keine Bewegung des Bodenelemens 7. Die Rotation der ersten Verriegelungsmittel 8 wird durch Kontakt der zweiten Verriegelungsmittel 10 mit den ersten Verriegelungsmitteln 8 an entsprechenden Anlageflächen 9c blockiert, so dass die ersten Verriegelungsmittel 8 in der Ausgangsstellung blockiert sind. Auch unter dem Druck der in die Portionskapsel 2b eingespritzten Flüssigkeit kann das Bodenelement 7 also nicht in die horizontale Richtung 100 bewegt werden. Die Brühvorrichtung 1 befindet sich also in einer sicher verriegelten Extraktionsstellung, wobei das Bodenelement 7 und die ersten Verriegelungsmittel 8 in der Ausgangsstellung sind.

Unabhängig von dem Typ der verwendeten Portionskapsel 2a, 2b werden die zweiten Verriegelungsmittel 10 stets durch die das zweite Brühkammerelement 4 und insbesondere durch die Haltemittel 6 zum Halten und Führen der Portionskapsel in die zweite Stellung bewegt, in der sie in die horizontale Richtung 100 in das erste Brühkammerelement 3 hineingeschoben sind. Entscheidend für die Konfiguration des Hohlraums 5, also für die Frage, ob der Hohlraum 5 volumentechnisch an den ersten Typ 2a oder den zweiten Typ 2b der Portionskapsel angepasst ist, ist somit lediglich in welcher Reihenfolge die Elemente der Blockiervorrichtung betätigt werden, insbesondere also, ob zuerst die ersten Verriegelungsmittel 8 oder die zweiten Verriegelungsmittel 10 betätigt werden.

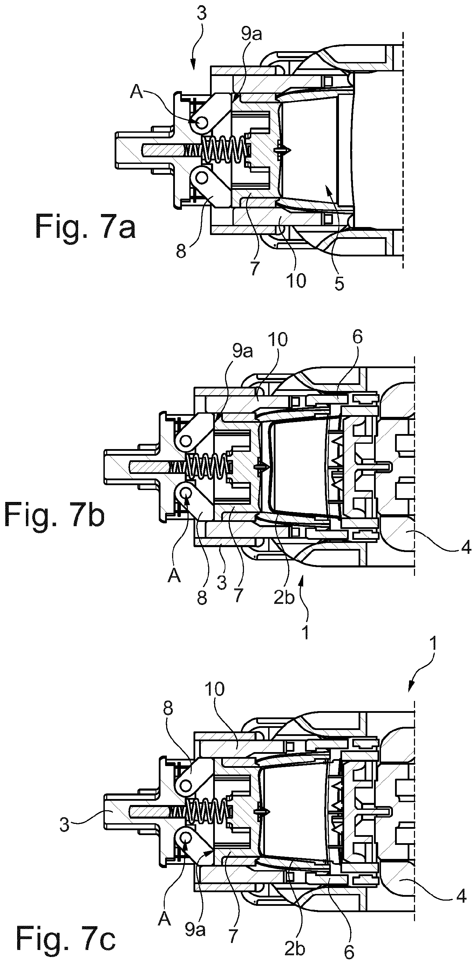

In den **Figuren 7a-7c** sind schematische Ansichten des erfindungsgemäßen Verfahrens bei Verwendung einer Portionskapsel des zweiten Typs 2b in mehreren aufeinanderfolgenden Schritten gemäß einer möglichen Ausführungsform dargestellt. Dabei entspricht **Figur 7a** der Darstellung in **Figur 4****,** so dass diesbezüglich auf die dortigen Ausführungen verwiesen wird. In gleicher Weise entspricht die Darstellung in **Figur 7c** derjenigen in **Figur 6****,** so dass auch hier auf die entsprechenden obigen Ausführungen verwiesen wird.

**Figur 7b** entspricht einer Zwischenstellung zwischen der Ladestellung und der Extraktionsstellung, die die erfindungsgemäße Mechanik verdeutlicht. Hier ist zu erkennen, dass die Portionskapsel 2b das Bodenelement 7 auf Grund seiner geringeren axialen Länge noch nicht kontaktiert, während die Haltemittel 6 die zweiten Verriegelungsmittel 10 bereits in das erste Brühkammerelement 3 hinein geschoben haben, so dass diese bereits eine Rotation der ersten Verriegelungsmittel 8 blockieren. Wie bereits zuvor dargelegt, lässt sich über die Justierungsmittel 12 einstellen, wie früh die Betätigung der zweiten Verriegelungsmittel 10 ausgelöst wird.

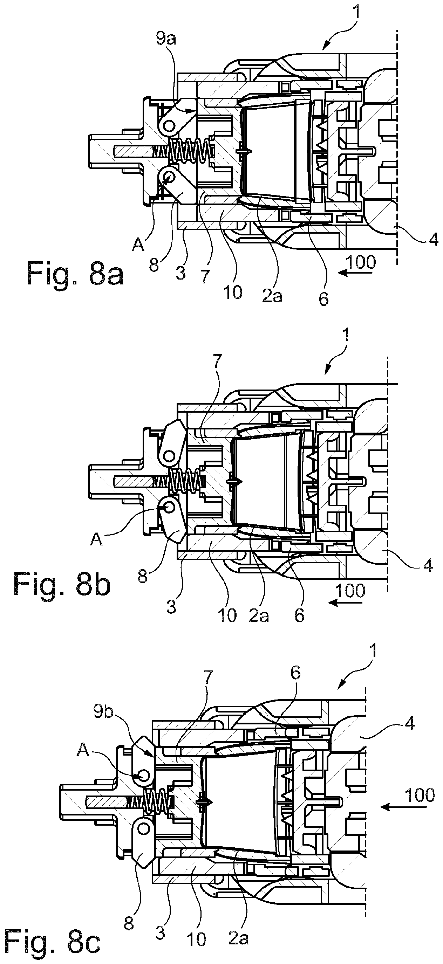

In den **Figuren 8a-8c** sind schematische Ansichten des erfindungsgemäßen Verfahrens bei Verwendung einer Portionskapsel des ersten Typs 2a in mehreren aufeinanderfolgenden Schritten gemäß einer möglichen Ausführungsform dargestellt. Dabei entspricht **Figur 8a** der Darstellung in **Figur 4****,** so dass diesbezüglich auf die dortigen Ausführungen verwiesen wird. In gleicher Weise entspricht die Darstellung in **Figur 8c** derjenigen in **Figur 5****,** so dass auch hier auf die entsprechenden obigen Ausführungen verwiesen wird.

Analog zu **Figur 7b** zeigt **Figur 8b** eine Zwischenposition bzw. -stellung zwischen der Ladestellung und der Extraktionsstellung. Die axial längere Portionskapsel des ersten Typs 2a hat das Bodenelement 7 bereits um einen Teil der Strecke in die zweite Stellung verschoben, wodurch wiederum die Rotation der ersten Verriegelungsmittel 8 ausgelöst wurde. Diese sind nun bereits so weit rotiert, dass die zweiten Verriegelungsmittel 10 sie nunmehr nicht mehr in der Ausgangsstellung blockieren können. Vielmehr ist es denkbar, dass die zweiten Verriegelungsmittel 10 derart ausgebildet sind, dass sie in der zweiten Stellung die ersten Verriegelungsmittel 8 zusätzlich in der zweiten Stellung arretieren bzw. blockieren.

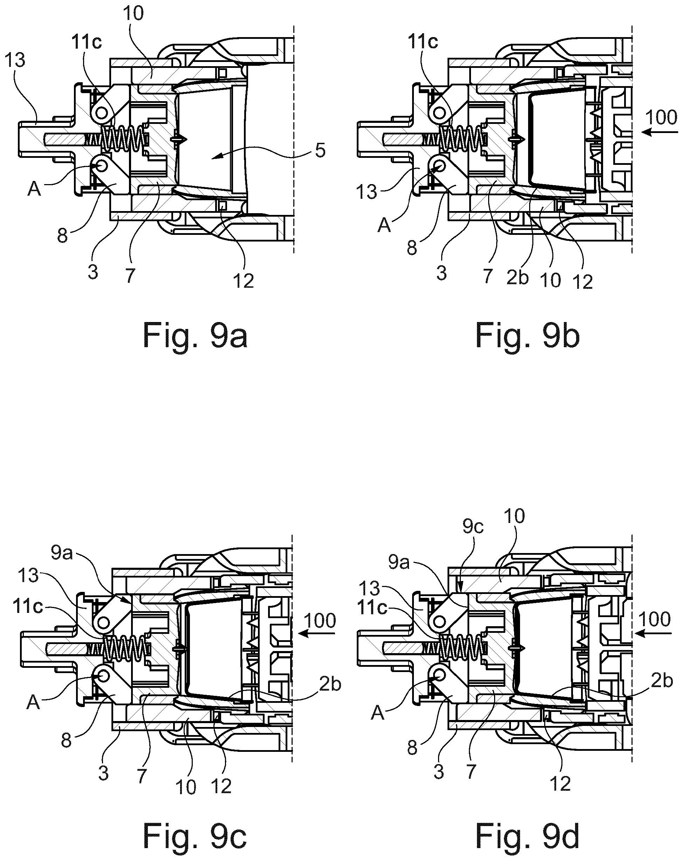

In den **Figuren 9a-9d** ist die erfindungsgemäße Brühvorrichtung 1 beim Übergang von der Ladestellung in die Extraktionsstellung bei Verwendung einer Portionskapsel des zweiten Typs 2b in mehreren aufeinanderfolgenden Schritten gemäß einer möglichen Ausführungsform dargestellt. Dabei entspricht die dargestellte Ausführungsform im Wesentlichen der in Zusammenhang mit den **Figuren 7a-7c** erläuterten Ausführungsform, wobei hier jedoch zwei Zwischenschritte gezeigt sind **(****Figuren 9b und 9c****).** In diesen Darstellungen sind insbesondere das Rückstellmittel 11c sowie die Justierungsmittel 12 besser zu erkennen. Ferner sind die Aufstechmittel des zweiten Brühkammerelements 4 gut zu erkennen, die die Deckelfolie der Portionskapsel 2b durchstechen, damit die Flüssigkeit durch die Portionskapsel 2b geleitet werden kann.

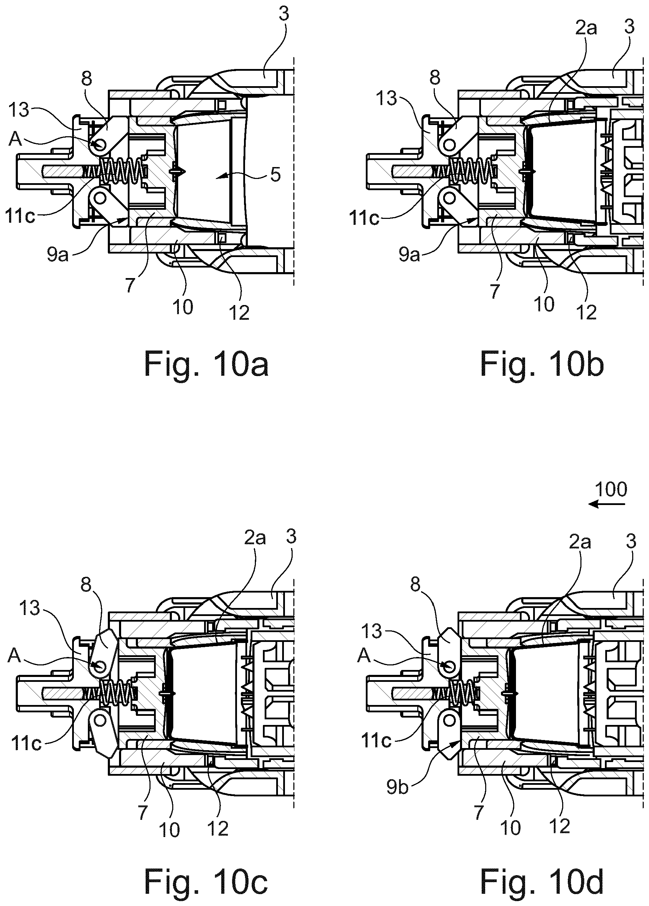

In den **Figuren 10a-10d** ist die erfindungsgemäße Brühvorrichtung 1 beim Übergang von der Ladestellung in die Extraktionsstellung bei Verwendung einer Portionskapsel des ersten Typs 2a in mehreren aufeinanderfolgenden Schritten gemäß einer möglichen Ausführungsform dargestellt. Dabei entspricht die dargestellte Ausführungsform im Wesentlichen der in Zusammenhang mit den **Figuren 8a-8c** erläuterten Ausführungsform, wobei hier jedoch zwei Zwischenschritte gezeigt sind **(****Figuren 10b und 10c****).** In diesen Darstellungen sind insbesondere das Rückstellmittel 11c sowie die Justierungsmittel 12 besser zu erkennen.

insbesondere im Vergleich der **Figuren 9b** **und** **10b** ist zu erkennen, wie die erfindungsgemäße Anpassung des Brühkammervolumens an das Portionskapselvolumen erfolgt. In beiden Figuren ist der Moment dargestellt, in dem die Haltemittel 6 die zweiten Verriegelungsmittel 10 erstmalig berühren. Dabei ist die Brühkammer noch nicht vollständig geschlossen. Während in **Figur 9b** die Portionskapsel 2b noch deutlich sichtbar vom Bodenelement 7 beabstandet ist, berührt die Portionskapsel 2a in **Figur 10b** das Bodenelement 7 bereits und das Aufstechelement des Bodenelements 7 hat den Boden der Portionskapsel 2a bereits durchstoßen. Jede weitere Bewegung des zweiten Brühkammerelements 4 in die horizontale Richtung 100 wird daher dazu führen, dass das Bodenelement 7 bewegt wird, wodurch wiederum die Rotation der ersten Verriegelungsmittel 8 bewirkt wird.

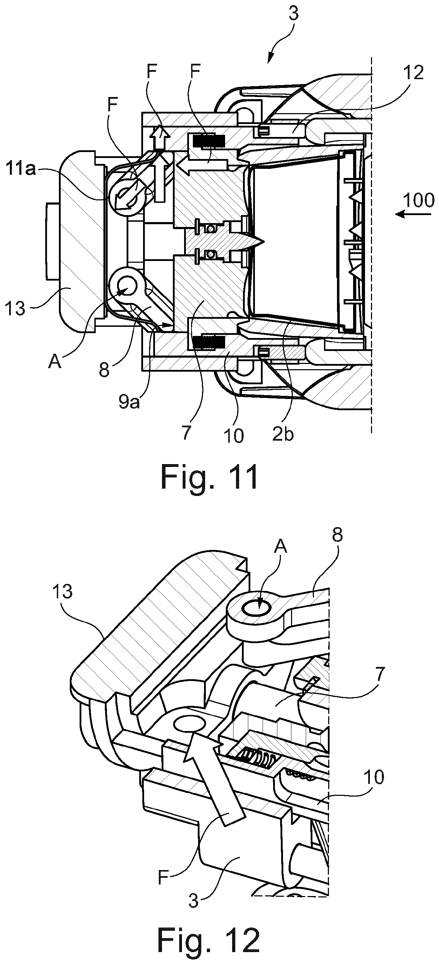

In **Figur 11** ist eine Schnittdarstellung einer erfindungsgemäßen Brühvorrichtung 1 in der Extraktionsstellung bei Verwendung einer Portionskapsel des zweiten Typs 2b gemäß einer möglichen Ausführungsform mit einer Darstellung der wirkenden Kräfte gezeigt. Die wirkenden Kräfte sind dabei über Pfeile symbolisiert. Im Falle einer kleinen Portionskapsel 2b wirken diese auf das Bodenelement 7 und werden dann zum einen zu den Seiten des ersten Brühkammerelements 3 über das erste Verriegelungsmittel 8 und die Anlageflächen 9c auf das zweite Verriegelungsmittel in die Brühvorrichtung 1 und von dort auf das Gehäuse der Getränkezubereitungsvorrichtung abgeleitet. Hierzu sind die Anlageflächen 9a entsprechend dimensioniert. Zum anderen werden sie über das schräg gestellte erste Verriegelungsmittel 8 auf die Rotationsachse A bzw. deren Führungsfläche abgeleitet. Dies ist im Detail auch in **Figur 12** dargestellt.

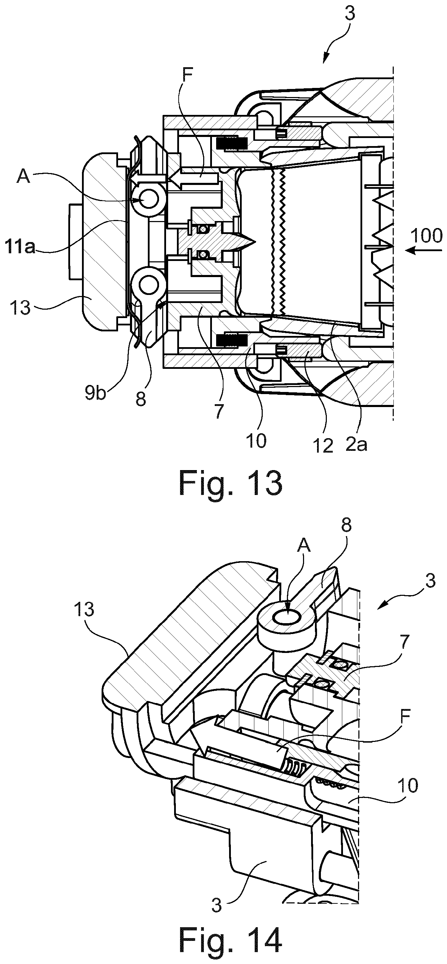

In **Figur 13** ist eine Schnittdarstellung einer erfindungsgemäßen Brühvorrichtung 1 in der Extraktionsstellung bei Verwendung einer Portionskapsel des ersten Typs 2a gemäß einer möglichen Ausführungsform mit einer Darstellung der wirkenden Kräfte gezeigt. Erneut sind die wirkenden Kräfte durch Pfeile symbolisiert. Im Falle der Verwendung einer größeren Portionskapsel 2a werden die Kräfte von dem Bodenelement 7 über die Anlageflächen 9b auf die ersten Verriegelungsmittel 8 und von dort auf das Deckelelement 13 übertragen. Ggf. werden die Kräfte von dem Deckelelement 13 in das Gehäuse der Getränkezubereitungsvorrichtung übertragen.

In **Figur 14** ist eine perspektivische Detailansicht der Ausführungsform gemäß **Figur 13** unter Darstellung der wirkenden Kräfte gezeigt. Dabei ist insbesondere die Fläche erkennbar, über welche die Kraftübertragung von dem ersten Verriegelungsmittel 8 auf das Deckelelement 13 erfolgt.

### Bezugszeichenliste

- 1: Brühvorrichtung
- 2a, 2b: Portionskapsel erster/zweiter Typ
- 3: erstes Brühkammerelement
- 4: zweites Brühkammerelement
- 5: Hohlraum
- 6: Haltemittel
- 7: Bodenelement
- 8: erstes Verriegelungsmittel
- 9a, 9b, 9c: Anlagefläche in Ausgangsstellung bzw. zweiter Stellung
- 10: zweites Verriegelungsmittel
- 11a, 11b, 11c: erstes/zweites/drittes Rückstellmittel
- 12: Justierungsmittel
- 13: Deckelelement

- 100: horizontale Richtung

- A: Rotationsachse

## Patentansprüche

1. Getränkezubereitungsvorrichtung mit einem Gehäuse und einer in diesem Gehäuse angeordneten Brühvorrichtung (1) zum Extrahieren einer ein Getränkesubstrat enthaltenden Portionskapsel (2a, 2b) eines ersten (2a) und eines zweiten Typs (2b), wobei eine Portionskapsel des ersten Typs (2a) eine größere axiale Länge aufweist als eine Portionskapsel des zweiten Typs (2b), wobei die Brühvorrichtung (1) ein erstes Brühkammerelement (3) und ein zweites Brühkammerelement (4) umfasst, wobei das erste Brühkammerelement (3) und das zweite Brühkammerelement (4) von einer Ladestellung, in welcher das erste Brühkammerelement (3) und das zweite Brühkammerelement (4) voneinander beabstandet sind, in eine Extraktionsstellung, in welcher das erste Brühkammerelement (3) und das zweite Brühkammerelement (4) eine im Wesentlichen geschlossene Brühkammer bilden und in welcher ein Brühvorgang durchführbar ist, entlang eines vorbestimmten und im Wesentlichen horizontalen Weges (100) relativ zueinander bewegbar sind, wobei das erste Brühkammerelement (3) einen zur Aufnahme der Portionskapsel (2a, 2b) vorgesehenen Hohlraum (5) umfasst, wobei der Hohlraum (5) axial durch ein entlang der horizontalen Richtung (100) zwischen einer Ausgangsstellung und einer zweiten Stellung verstellbares Bodenelement (7) begrenzt ist, wobei der Hohlraum (5) in der zweiten Stellung ein größeres Volumen als in der Ausgangsstellung aufweist, wobei das erste Brühkammerelement (3) eine durch die Portionskapsel (2a) und/oder das zweite Brühkammerelement (4) betätigbare Blockiervorrichtung aufweist, wobei die Blockiervorrichtung dazu vorgesehen ist, eine Bewegung des Bodenelements (7) in die horizontale Richtung (100) von dem zweiten Brühkammerelement (4) weg in der Ausgangsstellung oder in der zweiten Stellung zu blockieren, wobei die Blockiervorrichtung wenigstens ein um eine senkrecht zur horizontalen Richtung und insbesondere vertikal ausgerichtete Achse (A) rotierbares erstes Verriegelungsmittel (8) umfasst, wobei eine Bewegung des ersten Verriegelungsmittels (8) in der Ausgangsstellung und in der zweiten Stellung blockierbar ist,
**dadurch gekennzeichnet dass**
* die Portionskapseln in einem Randbereich, also im Bereich einer durch eine Deckelfolie verschlossenen Öffnung, identisch ausgebildet sind und sich lediglich hinsichtlich ihrer axialen Länge unterscheiden; und * das erste Verriegelungsmittel (8) in der Ausgangsstellung und in der zweiten Stellung jeweils eine Anlagefläche (9a, 9b) für das Bodenelement (7) aufweist, wobei die Anlagefläche (9a) in der Ausgangsstellung insbesondere verschieden ist von der Anlagefläche (9b) in der zweiten Stellung.

2. Getränkezubereitungsvorrichtung nach Anspruch 1, **dadurch gekennzeichnet, dass** die Haupterstreckungsebene des ersten Verriegelungsmittels (8) in der Ausgangsstellung einen Winkel von 45° zur Horizontalen einschließt und/oder in der zweiten Stellung einen Winkel von 90° zur Horizontalen einschließt.

3. Getränkezubereitungsvorrichtung nach einem der vorhergehenden Ansprüche, **dadurch gekennzeichnet, dass** die Blockiervorrichtung zwei erste Verriegelungsmittel (8) aufweist, die insbesondere spiegelsymmetrisch zu einer zwischen den ersten Verriegelungsmitteln (8) angeordneten und zur horizontalen Richtung parallelen Ebene angeordnet sind.

4. Getränkezubereitungsvorrichtung nach einem der vorhergehenden Ansprüche, **dadurch gekennzeichnet, dass** das erste Brühkammerelement (3) wenigstens ein zweites Verriegelungsmittel (10) aufweist, wobei das zweite Verriegelungsmittel (10) entlang eines vorbestimmten Weges horizontal beweglich vorgesehen ist, wobei das zweite Verriegelungsmittel (10) bei Verwendung einer Portionskapsel des zweiten Typs (2b) derart mit dem ersten Verriegelungsmittel (8) zusammenwirkend vorgesehen ist, dass es das erste Verriegelungsmittel (8) in der Ausgangstellung blockiert, wobei das zweite Brühkammerelement (4) vorzugsweise wenigstens ein Haltemittel (6) zum Halten und Führen der Portionskapsel (2a, 2b) aufweist, wobei das zweite Verriegelungsmittel (10) durch das zweite Brühkammerelement und insbesondere durch das Haltemittel (6) betätigbar ist.

5. Getränkezubereitungsvorrichtung nach einem der vorhergehenden Ansprüche, **dadurch gekennzeichnet, dass** das erste Verriegelungsmittel (8) bei Verwendung einer Portionskapsel des ersten Typs (2a) derart mit dem Bodenelement (7) zusammenwirkend vorgesehen ist, dass das erste Verriegelungsmittel (8) von der Ausgangsstellung in die zweite Stellung verbracht wird, wobei das erste Verriegelungsmittel (8) in der zweiten Stellung vorzugsweise durch das Gehäuse, das erste Brühkammerelement (3), das Bodenelement (7) und/oder das zweite Verriegelungsmittel (10) blockiert ist.

6. Getränkezubereitungsvorrichtung nach einem der vorhergehenden Ansprüche, **dadurch gekennzeichnet, dass** das erste Verriegelungsmittel (8) durch ein erstes Rückstellmittel (11a), insbesondere eine Blattfeder, in Richtung des Bodenelements (7) vorgespannt ist, dass das zweite Verriegelungsmittel (10) durch ein zweites Rückstellmittel (11b), insbesondere eine Spiralfeder, in Richtung des zweiten Brühkammerelements (4) vorgespannt ist und/oder dass das Bodenelement (7) durch ein drittes Rückstellmittel (11c), insbesondere eine Spiralfeder, in Richtung der Ausgangsstellung vorgespannt ist.

7. Getränkezubereitungsvorrichtung nach einem der vorhergehenden Ansprüche, **dadurch gekennzeichnet, dass** die Blockiervorrichtung, insbesondere das zweite Verriegelungsmittel (10), ein Justierungsmittel (12) aufweist.

8. System zur Getränkezubereitung umfassend eine Getränkezubereitungsvorrichtung nach einem der vorhergehenden Ansprüche und ein Portionskapselset umfassend wenigstens eine Portionskapsel eines ersten Typs (2a) und wenigstens eine Portionskapsel eines zweiten Typs (2b), wobei eine Portionskapsel des ersten Typs (2a) eine größere axiale Länge aufweist als eine Portionskapsel des zweiten Typs (2b), wobei die Portionskapseln (2a, 2b) in einem Randbereich, also im Bereich einer durch eine Deckelfolie verschlossenen Öffnung, identisch ausgebildet sind, wobei die Getränkezubereitungsvorrichtung ein Gehäuse und eine in diesem Gehäuse angeordnete Brühvorrichtung (1) zum Extrahieren einer ein Getränkesubstrat enthaltenden Portionskapsel des ersten (2a) und des zweiten Typs (2b) umfasst, wobei die Brühvorrichtung (1) ein erstes Brühkammerelement (3) und ein zweites Brühkammerelement (4) umfasst, wobei das erste Brühkammerelement (3) und das zweite Brühkammerelement (4) von einer Ladestellung, in welcher das erste Brühkammerelement (3) und das zweite Brühkammerelement (4) voneinander beabstandet sind, in eine Extraktionsstellung, in welcher das erste Brühkammerelement (3) und das zweite Brühkammerelement (4) eine im Wesentlichen geschlossene Brühkammer bilden und in welcher ein Brühvorgang durchführbar ist, entlang eines vorbestimmten und im Wesentlichen horizontalen Weges (100) relativ zueinander bewegbar sind, wobei das erste Brühkammerelement (3) einen zur Aufnahme der Portionskapsel (2a, 2b) vorgesehenen Hohlraum (5) umfasst, wobei der Hohlraum (5) axial durch ein entlang der horizontalen Richtung (100) zwischen einer Ausgangsstellung und einer zweiten Stellung verstellbares Bodenelement (7) begrenzt ist, wobei der Hohlraum (5) in der zweiten Stellung ein grö-ßeres Volumen als in der Ausgangsstellung aufweist, wobei das erste Brühkammerelement (3) eine durch die Portionskapsel (2a, 2b) und/oder das zweite Brühkammerelement (4) betätigbare Blockiervorrichtung aufweist, wobei die Blockiervorrichtung dazu vorgesehen ist, eine Bewegung des Bodenelements (7) in die horizontale Richtung (100) von dem zweiten Brühkammerelement (4) weg in der Ausgangsstellung oder in der zweiten Stellung zu blockieren.

9. Verfahren zur Herstellung eines Getränks mithilfe einer ein Getränkesubstrat beinhaltenden Portionskapsel eines ersten Typs (2a) oder eines zweiten Typs (2b), wobei eine Portionskapsel des ersten Typs (2a) eine größere axiale Länge aufweist als eine Portionskapsel des zweiten Typs (2b), wobei die Portionskapseln (2a, 2b) in einem Randbereich, also im Bereich einer durch eine Deckelfolie verschlossenen Öffnung, identisch ausgebildet sind und sich lediglich hinsichtlich ihrer axialen Länge unterscheiden, in einer Getränkezubereitungsvorrichtung nach einem der vorhergehenden Ansprüche 1-8, mit einem Gehäuse und einer in diesem Gehäuse angeordneten Brühvorrichtung (1) zum Extrahieren einer ein Getränkesubstrat enthaltenden Portionskapsel des ersten (2a) und des zweiten Typs (2b), wobei die Brühvorrichtung (1) ein erstes Brühkammerelement (3) und ein zweites Brühkammerelement (4) umfasst, wobei das erste Brühkammerelement (3) und das zweite Brühkammerelement (4) von einer Ladestellung, in welcher das erste Brühkammerelement (3) und das zweite Brühkammerelement (4) voneinander beabstandet sind, in eine Extraktionsstellung, in welcher das erste Brühkammerelement (3) und das zweite Brühkammerelement (4) eine im Wesentlichen geschlossene Brühkammer bilden und in welcher ein Brühvorgang durchführbar ist, entlang eines vorbestimmten und im Wesentlichen horizontalen Weges (100) relativ zueinander bewegbar sind, wobei das erste Brühkammerelement (3) einen zur Aufnahme der Portionskapsel (2a, 2b) vorgesehenen Hohlraum (5) umfasst, wobei der Hohlraum (5) axial durch ein entlang der horizontalen Richtung (100) zwischen einer Ausgangsstellung und einer zweiten Stellung verstellbares Bodenelement (7) begrenzt ist, wobei der Hohlraum (5) in der zweiten Stellung ein größeres Volumen als in der Ausgangsstellung aufweist, wobei das erste Brühkammerelement (3) eine durch die Portionskapsel (2a) und/oder das zweite Brühkammerelement (4) betätigbare Blockiervorrichtung aufweist, wobei die Blockiervorrichtung dazu vorgesehen ist, eine Bewegung des Bodenelements (7) in die horizontale Richtung (100) von dem zweiten Brühkammerelement (4) weg in der Ausgangsstellung oder in der zweiten Stellung zu blockieren, wobei die Portionskapsel (2a, 2b) in der Ladestellung in die Getränkezubereitungsvorrichtung eingeführt wird, wobei die Brühvorrichtung (1) in die Extraktionsstellung überführt wird, wobei
- bei Verwendung einer Portionskapsel des ersten Typs (2a) das Bodenelement (7) durch die Portionskapsel (2a) von der Ausgangsstellung in die zweite Stellung überführt wird und die Bewegung des Bodenelements (7) in die horizontale Richtung (100) in der zweiten Stellung blockiert wird,
- bei Verwendung einer Portionskapsel des zweiten Typs (2b) die Blockiervorrichtung derart durch das zweite Brühkammerelement (4) und insbesondere ein Haltemittel (6) zum Halten und Führen der Portionskapsel (2b) betätigt wird, dass die Bewegung des Bodenelements (7) von der Ausgangsstellung in die zweite Stellung blockiert wird,
wobei in der Extraktionsstellung eine Flüssigkeit vorzugsweise unter Druck durch die Portionskapsel geleitet wird, wobei das fertige Getränk durch das Bodenelement abgeführt und durch eine Auslassöffnung ausgegeben wird.

10. Verfahren nach Anspruch 9, wobei bei Verwendung der Portionskapsel des zweiten Typs (2b) das Haltemittel (6) ein zweites Verriegelungsmittel betätigt (10), welches das erste Verriegelungsmittel (8) in der Ausgangsstellung blockiert.

## Claims

1. Beverage preparation apparatus having a housing and a brewing apparatus (1), which is arranged in said housing, for extracting a single-serve capsule (2a, 2b), which contains a beverage substrate, of a first type (2a) and a second type (2b), wherein a single-serve capsule of the first type (2a) has a greater axial length than a single-serve capsule of the second type (2b), wherein the brewing apparatus (1) comprises a first brewing chamber element (3) and a second brewing chamber element (4), wherein the first brewing chamber element (3) and the second brewing chamber element (4) are movable relative to each other along a predetermined and substantially horizontal path (100) from a loading position, in which the first brewing chamber element (3) and the second brewing chamber element (4) are spaced apart from each other, into an extraction position, in which the first brewing chamber element (3) and the second brewing chamber element (4) form a substantially closed brewing chamber and in which a brewing operation can be carried out, wherein the first brewing chamber element (3) comprises a cavity (5) which is provided for receiving the single-serve capsule (2a, 2b), wherein the cavity (5) is delimited axially by a base element (7) which is adjustable along the horizontal direction (100) between a starting position and a second position, wherein the cavity (5) has a greater volume in the second position than in the starting position, wherein the first brewing chamber element (3) has a blocking apparatus which is actuable by the single-serve capsule (2a) and/or the second brewing chamber element (4), wherein the blocking apparatus is provided to block a movement of the base element (7) in the horizontal direction (100) away from the second brewing chamber element (4) in the starting position or in the second position, wherein the blocking apparatus comprises at least one first locking means (8) which is rotatable about an axis (A) oriented perpendicularly to the horizontal direction and in particular vertically, wherein a movement of the first locking means (8) is blockable in the starting position and in the second position, **characterized in that** the single-serve capsules can be formed identically in an edge region, i.e. in the region of an opening closed by a cover film, and differ only in respect of their axial length; and the first locking means (8) in each case has a contact surface (9a, 9b) for the base element (7) in the starting position and in the second position, wherein the contact surface (9a) in the starting position is in particular different from the contact surface (9b) in the second position.

2. Beverage preparation apparatus according to Claim 1, **characterized in that** the main plane of extent of the first locking means (8) forms an angle of 45° to the horizontal in the starting position and/or forms an angle of 90° to the horizontal in the second position.

3. Beverage preparation apparatus according to either of the preceding claims, **characterized in that** the blocking apparatus has two first locking means (8) which are arranged in particular mirror-symmetrically to a plane which is arranged between the first locking means (8) and is parallel to the horizontal direction.

4. Beverage preparation apparatus according to one of the preceding claims, **characterized in that** the first brewing chamber element (3) has at least one second locking means (10), wherein the second locking means (10) is provided so as to be movable horizontally along a predetermined path, wherein, when a single-serve capsule of the second type (2b) is used, the second locking means (10) is provided so as to interact with the first locking means (8) in such a manner that it blocks the first locking means (8) in the starting position, wherein the second brewing chamber element (4) preferably has at least one holding means (6) for holding and guiding the single-serve capsule (2a, 2b), wherein the second locking means (10) is actuable by the second brewing chamber element and in particular by the holding means (6).

5. Beverage preparation apparatus according to one of the preceding claims, **characterized in that**, when a single-serve capsule of the first type (2a) is used, the first locking means (8) is provided so as to interact with the base element (7) in such a manner that the first locking means (8) is brought from the starting position into the second position, wherein the first locking means (8) is blocked in the second position preferably by the housing, the first brewing chamber element (3), the base element (7) and/or the second locking means (10).

6. Beverage preparation apparatus according to one of the preceding claims, **characterized in that** the first locking means (8) is prestressed in the direction of the base element (7) by a first restoring means (11a), in particular a leaf spring, **in that** the second locking means (10) is prestressed in the direction of the second brewing chamber element (4) by a second restoring means (11b), in particular a spiral spring, and/or **in that** the base element (7) is prestressed in the direction of the starting position by a third restoring means (11c), in particular a spiral spring.

7. Beverage preparation apparatus according to one of the preceding claims, **characterized in that** the blocking apparatus, in particular the second locking means (10), has an adjustment means (12).

8. System for preparing a beverage, comprising a beverage preparation apparatus according to one of the preceding claims and a single-serve capsule set comprising at least one single-serve capsule of a first type (2a) and at least one single-serve capsule of a second type (2b), wherein a single-serve capsule of the first type (2a) has a greater axial length than a single-serve capsule of the second type (2b), wherein the single-serve capsules (2a, 2b) are formed identically in an edge region, i.e. in the region of an opening closed by a cover film, wherein the beverage preparation apparatus comprises a housing and a brewing apparatus (1), which is arranged in said housing, for extracting a single-serve capsule, which contains a beverage substrate, of the first type (2a) and the second type (2b), wherein the brewing apparatus (1) comprises a first brewing chamber element (3) and a second brewing chamber element (4), wherein the first brewing chamber element (3) and the second brewing chamber element (4) are movable relative to each other along a predetermined and substantially horizontal path (100) from a loading position, in which the first brewing chamber element (3) and the second brewing chamber element (4) are spaced apart from each other, into an extraction position, in which the first brewing chamber element (3) and the second brewing chamber element (4) form a substantially closed brewing chamber and in which a brewing operation can be carried out, wherein the first brewing chamber element (3) comprises a cavity (5) which is provided for receiving the single-serve capsule (2a, 2b), wherein the cavity (5) is delimited axially by a base element (7) which is adjustable along the horizontal direction (100) between a starting position and a second position, wherein the cavity (5) has a greater volume in the second position than in the starting position, wherein the first brewing chamber element (3) has a blocking apparatus which is actuable by the single-serve capsule (2a, 2b) and/or the second brewing chamber element (4), wherein the blocking apparatus is provided to block a movement of the base element (7) in the horizontal direction (100) away from the second brewing chamber element (4) in the starting position or in the second position.

9. Method for preparing a beverage using a single-serve capsule, which contains a beverage substrate, of a first type (2a) or a second type (2b), wherein a single-serve capsule of the first type (2a) has a greater axial length than a single-serve capsule of the second type (2b), wherein the single-serve capsules (2a, 2b) are formed identically in an edge region, i.e. in the region of an opening closed by a cover film, and differ only in respect of their length, in a beverage preparation apparatus according to one of the preceding Claims 1-8 having a housing and a brewing apparatus (1), which is arranged in said housing, for extracting a single-serve capsule, which contains a beverage substrate, of the first type (2a) and the second type (2b), wherein the brewing apparatus (1) comprises a first brewing chamber element (3) and a second brewing chamber element (4), wherein the first brewing chamber element (3) and the second brewing chamber element (4) are movable relative to each other along a predetermined and substantially horizontal path (100) from a loading position, in which the first brewing chamber element (3) and the second brewing chamber element (4) are spaced apart from each other, into an extraction position, in which the first brewing chamber element (3) and the second brewing chamber element (4) form a substantially closed brewing chamber and in which a brewing operation can be carried out, wherein the first brewing chamber element (3) comprises a cavity (5) which is provided for receiving the single-serve capsule (2a, 2b), wherein the cavity (5) is delimited axially by a base element (7) which is adjustable along the horizontal direction (100) between a starting position and a second position, wherein the cavity (5) has a greater volume in the second position than in the starting position, wherein the first brewing chamber element (3) has a blocking apparatus which is actuable by the single-serve capsule (2a) and/or the second brewing chamber element (4), wherein the blocking apparatus is provided to block a movement of the base element (7) in the horizontal direction (100) away from the second brewing chamber element (4) in the starting position or in the second position, wherein, in the loading position, the single-serve capsule (2a, 2b) is introduced into the beverage preparation apparatus, wherein the brewing apparatus (1) is transferred into the extraction position, wherein
- when a single-serve capsule of the first type (2a) is used, the base element (7) is transferred by the single-serve capsule (2a) from the starting position into the second position, and the movement of the base element (7) in the horizontal direction (100) is blocked in the second position,
- when a single-serve capsule of the second type (2b) is used, the blocking apparatus is actuated by the second brewing chamber element (4), and in particular by a holding means (6) for holding and guiding the single-serve capsule (2b), in such a manner that the movement of the base element (7) from the starting position into the second position is blocked,
wherein, in the extraction position, a liquid is conducted preferably under pressure through the single-serve capsule, wherein the finished beverage is discharged through the base element and output through an outlet opening.

10. Method according to Claim 9, wherein, when the single-serve capsule of the second type (2b) is used, the holding means (6) actuates a second locking means (10) which blocks the first locking means (8) in the starting position.

## Revendications

1. Dispositif de préparation de boissons avec un boîtier et un dispositif d'infusion (1) agencé dans ce boîtier pour extraire une capsule-portion (2a, 2b) d'un premier type (2a) et d'un deuxième type (2b) contenant un substrat de boisson, une capsule-portion du premier type (2a) présentant une longueur axiale plus grande qu'une capsule-portion du deuxième type (2b), le dispositif d'infusion (1) comprenant un premier élément de chambre d'infusion (3) et un deuxième élément de chambre d'infusion (4), le premier élément de chambre d'infusion (3) et le deuxième élément de chambre d'infusion (4) pouvant être déplacés l'un par rapport à l'autre le long d'une trajectoire prédéterminée et essentiellement horizontale (100) d'une position de chargement, dans laquelle le premier élément de chambre d'infusion (3) et le deuxième élément de chambre d'infusion (4) sont espacés l'un de l'autre, à une position d'extraction dans laquelle le premier élément de chambre d'infusion (3) et le deuxième élément de chambre d'infusion (4) forment une chambre d'infusion essentiellement fermée et dans laquelle une opération d'infusion peut être effectuée, le premier élément de chambre d'infusion (3) comprenant une cavité prévue pour recevoir la capsule-portion (2a, 2b), la cavité (5) étant délimitée axialement par un élément de fond (7) pouvant être réglé le long de la direction horizontale (100) entre une position initiale et une deuxième position, la cavité (5) présentant dans la deuxième position un volume plus grand que dans la position initiale, le premier élément de chambre d'infusion (3) présentant un dispositif de blocage pouvant être actionné par la capsule-portion (2a) et/ou le deuxième élément de chambre d'infusion (4), le dispositif de blocage étant prévu pour bloquer un déplacement de l'élément de fond (7) dans la direction horizontale (100) à l'écart du deuxième élément de chambre d'infusion (4) dans la position initiale ou dans la deuxième position, le dispositif de blocage comprenant au moins un premier moyen de verrouillage (8) pouvant tourner autour d'un axe (A) orienté perpendiculairement à la direction horizontale et notamment verticalement, un déplacement du premier moyen de verrouillage (8) pouvant être bloqué dans la position initiale et dans la deuxième position,
**caractérisé en ce que**
* les capsules-portions sont réalisées de manière identique dans une zone de bord, c'est-à-dire dans la zone d'une ouverture fermée par un film de couvercle, et ne diffèrent que par leur longueur axiale ; et
* le premier moyen de verrouillage (8) présente, dans la position initiale et dans la deuxième position, respectivement une surface d'appui (9a, 9b) pour l'élément de fond (7), la surface d'appui (9a) dans la position initiale étant notamment différente de la surface d'appui (9b) dans la deuxième position.

2. Dispositif de préparation de boissons selon la revendication 1, **caractérisé en ce que** le plan d'extension principal du premier moyen de verrouillage (8) forme un angle de 45° par rapport à l'horizontale dans la position initiale et/ou forme un angle de 90° par rapport à l'horizontale dans la deuxième position.

3. Dispositif de préparation de boissons selon l'une quelconque des revendications précédentes, **caractérisé en ce que** le dispositif de blocage présente deux premiers moyens de verrouillage (8) agencés notamment de manière symétrique par rapport à un plan agencé entre les premiers moyens de verrouillage (8) et parallèle à la direction horizontale.

4. Dispositif de préparation de boissons selon l'une quelconque des revendications précédentes, **caractérisé en ce que** le premier élément de chambre d'infusion (3) présente au moins un deuxième moyen de verrouillage (10), le deuxième moyen de verrouillage (10) étant prévu mobile horizontalement le long d'une trajectoire prédéterminée, le deuxième moyen de verrouillage (10) étant prévu pour coopérer avec le premier moyen de verrouillage (8) lors de l'utilisation d'une capsule-portion du deuxième type (2b) de telle sorte qu'il bloque le premier moyen de verrouillage (8) dans la position initiale, le deuxième élément de chambre d'infusion (4) présentant de préférence au moins un moyen de maintien (6) pour maintenir et guider la capsule-portion (2a, 2b), le deuxième moyen de verrouillage (10) pouvant être actionné par le deuxième élément de chambre d'infusion et notamment par le moyen de maintien (6).

5. Dispositif de préparation de boissons selon l'une quelconque des revendications précédentes, **caractérisé en ce que**, lors de l'utilisation d'une capsule-portion du premier type (2a), le premier moyen de verrouillage (8) est prévu pour coopérer avec l'élément de fond (7) de telle sorte que le premier moyen de verrouillage (8) est déplacé de la position initiale à la deuxième position, le premier moyen de verrouillage (8) étant de préférence bloqué dans la deuxième position par le boîtier, le premier élément de chambre d'infusion (3), l'élément de fond (7) et/ou le deuxième moyen de verrouillage (10).

6. Dispositif de préparation de boissons selon l'une quelconque des revendications précédentes, **caractérisé en ce que** le premier moyen de verrouillage (8) est précontraint par un premier moyen de rappel (11a), notamment un ressort à lame, en direction de l'élément de fond (7), **en ce que** le deuxième moyen de verrouillage (10) est précontraint par un deuxième moyen de rappel (11b), notamment un ressort spiral, en direction du deuxième élément de chambre d'infusion (4) et/ou **en ce que** l'élément de fond (7) est précontraint par un troisième moyen de rappel (11c), notamment un ressort spiral, en direction de la position initiale.

7. Dispositif de préparation de boissons selon l'une quelconque des revendications précédentes, **caractérisé en ce que** le dispositif de blocage, notamment le deuxième moyen de verrouillage (10), présente un moyen d'ajustement (12).

8. Système de préparation de boissons comprenant un dispositif de préparation de boissons selon l'une quelconque des revendications précédentes et un ensemble de capsules-portions comprenant au moins une capsule-portion d'un premier type (2a) et au moins une capsule-portion d'un deuxième type (2b), une capsule-portion du premier type (2a) présentant une longueur axiale plus grande qu'une capsule-portion du deuxième type (2b), les capsules-portions (2a, 2b) étant réalisées de manière identique dans une zone de bord, c'est-à-dire dans la zone d'une ouverture fermée par un film de couvercle, le dispositif de préparation de boissons comprenant un boîtier et un dispositif d'infusion (1) agencé dans ce boîtier pour extraire une capsule-portion du premier type (2a) et du deuxième type (2b) contenant un substrat de boisson, le dispositif d'infusion (1) comprenant un premier élément de chambre d'infusion (3) et un deuxième élément de chambre d'infusion (4), le premier élément de chambre d'infusion (3) et le deuxième élément de chambre d'infusion (4) pouvant être déplacés l'un par rapport à l'autre le long d'une trajectoire prédéterminée et essentiellement horizontale (100) d'une position de chargement, dans laquelle le premier élément de chambre d'infusion (3) et le deuxième élément de chambre d'infusion (4) sont espacés l'un de l'autre, à une position d'extraction, dans laquelle le premier élément de chambre d'infusion (3) et le deuxième élément de chambre d'infusion (4) forment une chambre d'infusion essentiellement fermée et dans laquelle une opération d'infusion peut être effectuée, le premier élément de chambre d'infusion (3) comprenant une cavité (5) prévue pour recevoir la capsule-portion (2a, 2b), la cavité (5) étant délimitée axialement par un élément de fond (7) qui peut être réglé le long de la direction horizontale (100) entre une position initiale et une deuxième position, la cavité (5) présentant un volume plus grand dans la deuxième position que dans la position initiale, le premier élément de chambre d'infusion (3) présentant un dispositif de blocage pouvant être actionné par la capsule-portion (2a, 2b) et/ou le deuxième élément de chambre d'infusion (4), le dispositif de blocage étant prévu pour bloquer un déplacement de l'élément de fond (7) dans la direction horizontale (100) à l'écart du deuxième élément de chambre d'infusion (4) dans la position initiale ou dans la deuxième position.

9. Procédé de préparation d'une boisson à l'aide d'une capsule-portion d'un premier type (2a) ou d'un deuxième type (2b) contenant un substrat de boisson, une capsule-portion du premier type (2a) présentant une longueur axiale plus grande qu'une capsule-portion du deuxième type (2b), les capsules-portions (2a, 2b) étant réalisées de manière identique dans une zone de bord, c'est-à-dire dans la zone d'une ouverture fermée par un film de couverture, et ne différant que par leur longueur axiale, dans un dispositif de préparation de boissons selon l'une quelconque des revendications 1 à 8 précédentes, avec un boîtier et un dispositif d'infusion (1) agencé dans ce boîtier pour extraire une capsule-portion du premier (2a) et du deuxième type (2b) contenant un substrat de boisson, le dispositif d'infusion (1) comprenant un premier élément de chambre d'infusion (3) et un deuxième élément de chambre d'infusion (4), le premier élément de chambre d'infusion (3) et le deuxième élément de chambre d'infusion (4) pouvant être déplacés l'un par rapport à l'autre le long d'une trajectoire prédéterminée et essentiellement horizontale (100) d'une position de chargement, dans laquelle le premier élément de chambre d'infusion (3) et le deuxième élément de chambre d'infusion (4) sont espacés, à une position d'extraction, dans laquelle le premier élément de chambre d'infusion (3) et le deuxième élément de chambre d'infusion (4) forment une chambre d'infusion essentiellement fermée et dans laquelle une opération d'infusion peut être effectuée, le premier élément de chambre d'infusion (3) comprenant une cavité (5) prévue pour recevoir la capsule-portion (2a, 2b), la cavité (5) étant délimitée axialement par un élément de fond (7) pouvant être réglé le long de la direction horizontale (100) entre une position initiale et une deuxième position, la cavité (5) présentant dans la deuxième position un volume plus grand que dans la position initiale, le premier élément de chambre d'infusion (3) présentant un dispositif de blocage pouvant être actionné par la capsule-portion (2a) et/ou le deuxième élément de chambre d'infusion (4), le dispositif de blocage étant prévu pour bloquer le déplacement de l'élément de fond (7) dans la direction horizontale (100) à l'écart du deuxième élément de chambre d'infusion (4) dans la position initiale ou dans la deuxième position, la capsule-portion (2a, 2b) étant introduite dans le dispositif de préparation de boissons dans la position de chargement, le dispositif d'infusion (1) étant transféré dans la position d'extraction,
- lors de l'utilisation d'une capsule-portion du premier type (2a), l'élément de fond (7) étant transféré par la capsule-portion (2a) de la position initiale à la deuxième position et le déplacement de l'élément de fond (7) dans la direction horizontale (100) étant bloqué dans la deuxième position,
- lors de l'utilisation d'une capsule-portion du deuxième type (2b), le dispositif de blocage étant actionné par le deuxième élément de chambre d'infusion (4) et notamment un moyen de maintien (6) pour maintenir et guider la capsule-portion (2b), de telle sorte que le déplacement de l'élément de fond (7) de la position initiale à la deuxième position est bloqué,
dans la position d'extraction, un liquide étant conduit, de préférence sous pression, à travers la capsule-portion, la boisson finie étant évacuée à travers l'élément de fond et distribuée par un orifice de sortie.

10. Procédé selon la revendication 9, dans lequel, lors de l'utilisation de la capsule-portion du deuxième type (2b), le moyen de maintien (6) actionne (10) un deuxième moyen de verrouillage qui bloque le premier moyen de verrouillage (8) dans la position initiale.
